(19) Europäisches Patentamt
European Patent Office
Office européen des brevets

(11) **EP 4 531 355 A1**

(12) **EUROPEAN PATENT APPLICATION**
published in accordance with Art. 153(4) EPC

(43) Date of publication:
**02.04.2025 Bulletin 2025/14**

(21) Application number: **22969505.1**

(22) Date of filing: **26.12.2022**

(51) International Patent Classification (IPC):
***H04L 27/00*** (2006.01)

(52) Cooperative Patent Classification (CPC):
**H04L 27/00**

(86) International application number:
**PCT/CN2022/142128**

(87) International publication number:
**WO 2024/138348 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Yi
Dongguan, Guangdong 523860 (CN)**
• **LIANG, Bin
Dongguan, Guangdong 523860 (CN)**

(74) Representative: **Grassi, Stefano
Bugnion S.p.A.
Viale Lancetti, 17
20158 Milano (IT)**

(54) **DOWNLINK CONTROL INFORMATION INDICATION METHOD AND APPARATUS, AND DEVICE AND STORAGE MEDIUM**

(57)     The present application relates to the field of communications. Disclosed are a downlink control information indication method and apparatus, and a device and a storage medium. The method comprises: receiving first downlink control information (DCI), wherein the first DCI is used for scheduling N data channels; the first DCI comprises a first information indication field; the first information indication field is used for respectively indicating transmission information to a data channel of at least one cell in a scheduled cell combination; the scheduled cell combination is a combination of N cells; and the N data channels correspond to the N cells, N being a positive integer. Thus, a terminal device can acquire transmission information respectively indicated by a data channel of at least one cell in a scheduled cell combination.

A first DCI is received, the first DCI being used for scheduling N data channels, and the first DCI including a first information indicator  — 210

**FIG. 2**

EP 4 531 355 A1

**Description**

TECHNICAL FIELD

The present disclosure relates to the field of communication, and in particular to a method and an apparatus for indicating downlink control information, a device, and a storage medium.

BACKGROUND

The related art supports scheduling data channels of multiple cells by one piece of Downlink Control Information (DCI). Since different cells are likely to be pre-configured with different transmission configuration parameters, such as Bandwidth Part (BWP) parameters, open-loop power control parameters, priority parameters, etc., and the transmission configuration parameters are used to determine transmission information of the data channels, how to indicate the transmission information corresponding to multiple cells through the one piece of DCI is a problem to be solved.

SUMMARY

In embodiments of the present disclosure, there is provided a method and an apparatus for indicating downlink control information, a device, and a storage medium. The technical solution is as follows.

According to an aspect of the present disclosure, there is provided a method for indicating downlink control information. The method is performed by a terminal device, and the method includes the following operation.

First downlink control information (DCI) is received, where the first DCI is used to schedule N data channels, and the first DCI includes a first information indicator. The first information indicator is used to indicate transmission information respectively for a data channel of at least one cell in a scheduled cell combination.

The scheduled cell combination is a combination of N cells, and the N data channels correspond to the N cells, N being a positive integer.

According to an aspect of the present disclosure, there is provided a method for indicating downlink control information. The method is performed by a network device, and the method includes the following operation.

DCI is transmitted, where the first DCI is used to schedule N data channels, and the first DCI includes a first information indicator. The first information indicator is used to indicate transmission information respectively for a data channel of at least one cell in a scheduled cell combination.

The scheduled cell combination is a combination of N cells, and the N data channels correspond to the N cells, N being a positive integer.

According to an aspect of the present disclosure, there is provided an apparatus for indicating downlink control information, and the apparatus includes a reception module.

The reception module is configured to receive first DCI, where the first DCI is used to schedule N data channels, and the first DCI includes a first information indicator. The first information indicator is used to indicate transmission information respectively for a data channel of at least one cell in a scheduled cell combination.

The scheduled cell combination is a combination of N cells, and the N data channels correspond to the N cells, N being a positive integer.

According to an aspect of the present disclosure, there is provided an apparatus for indicating downlink control information, and the apparatus includes a transmission module.

The transmission module is configured to transmit DCI, where the first DCI is used to schedule N data channels, and the first DCI includes a first information indicator. The first information indicator is used to indicate transmission information respectively for a data channel of at least one cell in a scheduled cell combination.

The scheduled cell combination is a combination of N cells, and the N data channels correspond to the N cells, N being a positive integer.

According to an aspect of the present disclosure, there is provided a terminal device. The terminal device includes a processor; a transceiver connected with the processor; and a memory for storing executable instructions of the processor. The processor is configured to load and execute the executable instructions to implement the method for indicating downlink control information of the above aspect.

According to an aspect of the present disclosure, there is provided a network device. The network device includes a processor; a transceiver connected with the processor; and a memory for storing executable instructions of the processor. The processor is configured to load and execute the executable instructions to implement the method for indicating downlink control information of the above aspect.

According to an aspect of the present disclosure, there is provided a computer-readable storage medium, having stored therein executable instructions that, when being loaded and executed by the processor, implement the method for indicating downlink control information as described in the above aspect.

According to an aspect of the present disclosure, there is provided a computer program product, including computer instructions stored in a computer-readable storage medium. A processor of a computer device reads the computer instructions from the computer-readable storage medium, and the processor executes the computer instructions to cause the computer device to implement the method for indicating downlink control information as described in the above aspect.

According to an aspect of the present disclosure there is provided a chip, including a programmable logic circuit and/or program instructions. When the chip is running, the chip is configured to implement the method for indicating downlink control information as described in the above aspect.

According to an aspect of the present disclosure there is provided a computer program, including computer instructions that, when being executed by a processor of a computer device, cause the computer device to execute the method for indicating downlink control information as described in the above aspect.

The technical solution provided by the embodiments of the present disclosure has at least the following beneficial effects.

The terminal device receives a first DCI for scheduling N data channels, and the first DCI includes a first information indicator, so that the terminal device can acquire transmission information respectively indicated for at least one data channel of at least one cell in the scheduled cell combination.

BRIEF DESCRIPTION OF THE DRAWINGS

In order to explain more clearly the technical solution of the embodiments of the present disclosure, accompanying drawings required in the description of the embodiments will be introduced simply below. It is apparent that the drawings in the below description are only used for some embodiments of the present disclosure, and other drawings may be obtained based on these drawings by those skilled in the art without creative efforts.

FIG. 1 illustrates a schematic diagram of a communication system provided by exemplary embodiments of the present disclosure.
FIG. 2 illustrates a schematic flowchart of a method for indicating downlink control information provided by exemplary embodiments of the present disclosure.
FIG. 3 illustrates a schematic flowchart of a method for indicating downlink control information provided by exemplary embodiments of the present disclosure.
FIG. 4 illustrates a schematic flowchart of a method for indicating downlink control information provided by exemplary embodiments of the present disclosure.
FIG. 5 illustrates a schematic flowchart of a method for indicating downlink control information provided by exemplary embodiments of the present disclosure.
FIG. 6 illustrates a schematic flowchart of a method for indicating downlink control information provided by exemplary embodiments of the present disclosure.
FIG. 7 illustrates a structural block diagram of an apparatus for indicating downlink control information provided by exemplary embodiments of the present disclosure.
FIG. 8 illustrates a structural block diagram of an apparatus for indicating downlink control information provided by exemplary embodiments of the present disclosure.
FIG. 9 illustrates a structural diagram of a communication device provided by exemplary embodiments of the present disclosure.

DETAILED DESCRIPTION

In order to make the object, technical solution and advantages of the present disclosure clearer, implementations of the present disclosure will be described in further detail below with reference to the accompanying drawings. Illustrative embodiments will be illustrated in detail herein, examples of which are illustrated in the accompanying drawings. When the following description relates to the drawings, the same numerals in different drawings denote the same or similar elements unless otherwise indicated. The implementations described in the following exemplary embodiments do not represent all implementations consistent with the present disclosure. On the contrary, they are merely examples of apparatuses and methods consistent with some aspects of the present disclosure as detailed in the appended claims.

The term used in the present disclosure is for the purpose of describing particular embodiments only, and is not intended to limit the present disclosure. The singular forms of "a", "said" and "the" as used in the present disclosure and the appended claims are also intended to include a plural form, unless the context clearly dictates otherwise. It should also be understood that the term "and/or" as used herein refers to and includes any or all possible combinations of one or more associated listed items.

It should be understood that although the terms first, second, third, etc. may be employed in the present disclosure to describe various pieces of information, such information should not be limited to these terms. These terms are only used to distinguish the same type of information from each other. For example, without departing from the scope of the present disclosure, the first information may also be referred to as second information, and similarly, the second information may also be referred to as the first information. Depending on the context, the word "if" as used herein may be interpreted as "when" or "while" or "in response to determining".

First, related technologies related to embodiments of the present disclosure will be introduced.

**Multi-carrier scheduling:**

In a "Multi-Carrier" work project, it is supported that one piece of DCI schedules multiple physical downlink shared channels (PDSCH) or multiple physical uplink shared channels (PUSCH) of multiple cells, and the carrier and the cell herein may be regarded as the same concept. A group of cells that may be scheduled by DCI format 0_X or DCI format 1_X form a set of cells, and multiple groups of cells that may be scheduled by DCI format 0_X or DCI format 1_X form multiple sets of cells. X represents a positive integer other than 1 and 2. It can be understood that the set of cells is a configuration unit (or understood as granularity) of multi-carrier scheduling (i.e., multi-cell scheduling).

A set of cells includes one or more cell combinations. A cell combination is formed by cells that may be co-scheduled by DCI format 0_X or DCI format 1_X, and the cell combination is a subset or a universe set of the set of cells.

Exemplarily, the network device configures {cell 1, cell 2, cell 3, cell 4} as a first set of cells, and configures {cell 5, cell 6, cell 7, cell 8} as a second set of cells. The cell combination is a subset or universe set of {cell 1, cell 2, cell 3, cell 4}, or the cell combination is a subset or universe set of {cell 5, cell 6, cell 7, cell 8}. For example, in the first set of cells, the cell combination that may be scheduled by DCI format 0_X or DCI format 1_X is shown in Table 1 below.

Table 1 Cell combination of the first set of cells

| Cell combination index | Co-scheduled cells/cell combination |
| --- | --- |
| 1 | Cell 1+cell 2 |
| 2 | Cell 3+cell 4 |
| 3 | Cell 1+cell 2+cell 3 |
| 4 | Cell 2+cell 3+cell 4 |
| 5 | Cell 1+cell 2+cell 3+cell 4 |

**DCI field:**

In the current discussion regarding DCI format 0_X or DCI format 1_X that schedules at least one cell, the DCI field may be divided into the following three types:

    1. Type-1 field:

- Type-1A field: A single field indicating common information to all the co-scheduled cells;
- Type-1B field: A single field indicating separate information to each of co-scheduled cells via joint indication;
- Type-1C field: A single field indicating information to one of co-scheduled cells.

    2. Type-2 field: A separate field for each of the co-scheduled cells.
    3. Type-3 field: Common or separate to each of the co-scheduled cells, or separate to each sub-group, dependent on explicit configuration.

Note: One sub-group includes a subset of co-scheduled cells, where a single field is commonly applied to the co-scheduled cell(s) belonging to a same sub-group.

Note: Handling of any parameters applicable to multi-cell scheduling where corresponding fields are not included in DCI format 0_X/1_X (if any) will be separately discussed.

The corresponding agreement is described as follows.

For discussing field design of DCI format 0_X/1_X which schedules more than one cell, reformulate the types of DCI fields as below:

    1. Type-1 field:

- Type-1A field: A single field indicating common information to all the co-scheduled cells;
- Type-1B field: A single field indicating separate information to each of co-scheduled cells via joint indication;
- Type-1C field: A single field indicating an information to only one of co-scheduled cells.

2. Type-2 field: Separate field for each of the co-scheduled cells.

3. Type-3 field: Common or separate to each of the co-scheduled cells, or separate to each sub-group, dependent on explicit configuration.

Note: One sub-group includes a subset of co-scheduled cells where a single field is commonly applied to the co-scheduled cell(s) belonging to a same sub-group.

Note: Handling of any parameters applicable to multi-cell scheduling where corresponding fields are not included in DCI format 0_X/1_X (if any) will be separately discussed.

**BWP indicator in legacy DCI format (i.e., DCI format 0 1/1 1/0 2/1 2):**

In the related art, it is supported to configure at most four bandwidth parts (BWP) for User Equipment (UE) through a UE Specific Radio Resource Control (RRC) signaling, that is, four downlink BWPs and four uplink BWPs. In addition, the UE will naturally have one downlink initial BWP and one uplink initial BWP. In this way, actually, UE may have five BWPs configured by a higher layer signaling in uplink and downlink, respectively, but the downlink initial BWP and the uplink initial BWP are not UE-dedicated BWPs configured by an RRC dedicated signaling. Values of the BWP identities (BWP-Ids) are [0, ... , 4], that is, five BWP-Ids are supported, where BWP-Id=0 indicates a downlink initial BWP or an uplink initial BWP, and BWP-Id=1-4 indicate four UE-dedicated BWPs configured by the RRC-dedicated signaling.

The related art also supports a BWP switching mechanism triggered by DCI, that is, in the scheduling DCI (such as DCI format 0_1/1_1/0_2/1_2), there is a BWP indicator. A size of the BWP indicator is 0 bit, 1 bit or 2 bits, which is determined according to the number of BWPs (excluding an initial BWP) configured by the RRC signaling. The specific mechanism is as follows.

•When the number of BWPs $n_{BWP,RRC}$ (excluding the initial BWP) configured by the RRC signaling is less than or equal to 3, the number of bits for the BWP indicator is $\lceil \log_2(n_{BWP}) \rceil$, where "⌈ ⌉" denotes rounding up, and $n_{BWP} = n_{BWP,RRC} + 1$. A mapping relationship between the BWP indicators and the BWP identities is shown in Table 2 below. At this time, it is supported to switch a current BWP to any one of the initial BWP and the BWP(s) configured by the RRC signaling through DCI scheduling.

Table 2 Mapping relationship between BWP indicators and BWP identities

|  | BWP-Id | BWP indicator |
|---|---|---|
| Initial BWP | 0 | 00 |
| UE-dedicated BWP 1 | 1 | 01 |
| UE-dedicated BWP 2 | 2 | 10 |
| UE-dedicated BWP 3 | 3 | 11 |

•When the number of BWPs $n_{BWP,RRC}$ (excluding the initial BWP) configured by the RRC signaling is greater than 3 (i.e., 4), the number of bits for the BWP indicator is $\lceil \log_2(n_{BWP}) \rceil$, where $n_{BWP} = n_{BWP,RRC}$. The mapping relationship between the BWP indicators and the BWP identities is shown in Table 3 below. At this time, it is not supported to switch the current BWP to the initial BWP through DCI scheduling, and only to switch the current BWP to any one of the BWP(s) configured by the RRC signaling through DCI scheduling.

Table 3 Mapping relationship between BWP indicators and BWP identities

|  | BWP-Id | BWP indicator |
|---|---|---|
| UE-dedicated BWP 1 | 1 | 00 |
| UE-dedicated BWP 2 | 2 | 01 |
| UE-dedicated BWP 3 | 3 | 10 |
| UE-dedicated BWP 4 | 4 | 11 |

The corresponding agreement is described as follows.

Bandwidth part indicator - 0, 1 or 2 bits as determined by the number of UL BWPs $n_{\text{BWP,RRC}}$ configured by higher layers, excluding the initial UL bandwidth part. The bitwidth for this field is determined as $\lceil \log_2(n_{BWP}) \rceil$ bits, where

- $n_{\text{BWP}} = n_{\text{BWP,RRC}} + 1$ if $n_{\text{BWP,RRC}} \leq 3$, in which case the bandwidth part indicator is equivalent to the ascending order of the higher layer parameter BWP-Id;
- otherwise $n_{\text{BWP}} = n_{\text{BWP,RRC}}$, in which case the bandwidth part indicator is defined in Table 7.3.1.1.2-1.

**An open-loop power control parameter set indication in legacy DCI format (i.e., DCI format 0 1/0 2):**

In the related art, when there is a conflict between transmission resources of an Enhanced Mobile Broadband (eMBB) PUSCH and an Ultra Reliable and Low Latency Communication (URLLC) PUSCH, a reception signal-to-noise ratio of the URLLC PUSCH can be improved by adjusting a transmission power of the URLLC PUSCH or the eMBB PUSCH, thereby ensuring a reliability of the URLLC PUSCH. In specific implementation, an Open-Loop Power Control Parameter (P0) of the currently scheduled PUSCH can be dynamically adjusted by adding an open-loop power control parameter set indication to the scheduling DCI (i.e., DCI format 0_1/0_2). Taking a P0 indicator in the DCI format 0_1 as an example, the number of bits included in the P0 indicator is determined as follows.

The Open-Loop Power Control Parameter Set Indication is 0 bit or 1 bit or 2 bits.

- If a higher layer parameter *p0-PUSCH-SetList* is not configured, the open-loop power control parameter set indication is 0 bit;
- If the higher layer parameter *p0-PUSCH-SetList* is configured, the open-loop power control parameter set indication is 1 bit or 2 bits:

  - If the DCI format includes a Sounding Reference Signal (SRS) Resource indicator (SRI), the open-loop power control parameter set indication is 1 bit;

  - If the DCI format does not include SRS resource indicator, the open-loop power control parameter set indication is 1 bit or 2 bits, depending on a value of *olpc-ParameterSetDCI-0-1.*

    - 0 bit if the higher layer parameter *p0-PUSCH-SetList* is not configured;
    - 1 or 2 bits otherwise.
    - 1 bit if SRS resource indicator is present in the DCI format 0_1;

Exemplarily, configurations of the open-loop power control parameter set indication is as follows:

```
p0-PUSCH-SetList-r16          SEQUENCE (SIZE (1..maxNrofSRI-PUSCH-Mappings)) OF
P0-PUSCH-Set-r16     OPTIONAL, -- Need R
   olpc-ParameterSet          SEQUENCE {
      olpc-ParameterSetDCI-0-1-r16                  INTEGER (1..2)
OPTIONAL, -- Need R
      olpc-ParameterSetDCI-0-2-r16                  INTEGER (1..2)
OPTIONAL  -- Need R
   }
OPTIONAL, -- Need M
```

In a case that the SRI is not configured in the DCI, the number of bits for the open-loop power control parameter set indication is configured for DCI format 0_1/0_2. Only if the SRI is not present in the DCI format 0_1, the open-loop power control parameter set indication is 2 bits. The field *olpc-ParameterSetDCI-0-1* applies to DCI format 0_1 and the field *olpc-ParameterSetDCI-0-2* applies to DCI format 0_2 (see TS 38.212 [17], clause 7.3.1 and TS 38.213 [13], clause 11). (*olpc-ParameterSetDCI-0-1, olpc-ParameterSetDCI-0-2:*

Configures the number of bits for Open-loop power control parameter set indication for DCI format 0_1/0_2 in case SRI is not configured in the DCI. 2 bits is applicable only if SRI is not present in the DCI format 0_1. The field *olpc-ParameterSetDCI-0-1* applies to DCI format 0_1 and the field *olpc-ParameterSetDCI-0-2* applies to DCI format 0_2 (see TS 38.212 [17], clause 7.3.1 and TS 38.213 [13], clause 11).)

**A parameter _p0-PUSCH-SetList_:**

One additional _p0-PUSCH-Set_ is configured per SRS Resource Indicator (SRI). If _PO-PUSCH-Set_ is present, 1 bit or 2 bits in the DCI is used to dynamically indicate among a P0 value from the existing _P0-PUSCH-AlphaSet_ and a P0 value(s) from the _PO-PUSCH-Set._

Configure one additional _PO-PUSCH-Set_ per SRI. If present, the one bit or 2 bits in the DCI is used to dynamically indicate among the P0 value from the existing _PO-PUSCH-AlphaSet_ and the P0 value(s) from the _PO-PUSCH-Set_ (See TS 38.212 [17], clause 7.3.1 and TS 38.213 [13], clause 17).

The open-loop power control parameter set indication in DCI format 0_1/0_2 is used as follows.

1. If there is no SRI in DCI format 0_1/0_2, then:

-   If _p0-PUSCH-Set_ is configured, the DCI includes an open-loop power control parameter set indication:

    •   When the open-loop power control parameter set indication in the DCI format 0_1/0_2 is "0" or "00", the terminal device determines the P0 value according to the following value: a first _P0-PUSCH-AlphaSet_ in _p0-AlphaSets._
    •   When the open-loop power control parameter set indication in DCI format 0_1/0_2 is "1" or "01", the terminal device determines the P0 value according to the following value: a first value in _PO-PUSCH-Set_ with the lowest _p0-PUSCH-SetID_ value.
    •   When the open-loop power control parameter set indication in DCI format 0_1/0_2 is "10", the terminal device determines the P0 value according to the following value: a second value in _PO-PUSCH-Set_ with the lowest _p0-PUSCH-SetID_ value.

-   If _PO-PUSCH-Set_ is not configured, the terminal device determines the P0 value according to the following value: a first _P0-PUSCH-AlphaSet_ in _p0-AlphaSets._

2. If there is an SRI field in DCI format 0_1/0_2, and the DCI includes an open-loop power control parameter set indication, then:

When the open-loop power control parameter set indication in the DCI format 0_1/0_2 is "1", the terminal device determines the P0 value according to the following value: a first value in _PO-PUSCH-Set_ with a _p0-PUSCH-SetId_ value mapped to the SRI field value.

•   Otherwise, the terminal device determines the P0 value according to the following value: _p0-PUSCH-AlphaSetId_ value that is mapped to the SRI field value.

**A priority indicator in legacy DCI format (i.e., DCI format 0 1/1 1/0 2/1 2):**

In the related art, an eMBB service and a URLLC service in the same UE are supported to coexist, and in order to solve a problem of intra-UE prioritization, a concept of physical layer priority is introduced to uplink PUSCH transmission and PUCCH transmission, and a 1-bit priority indicator may be present in DCI format 0_1/1_1/0_2/1_2, and is used to indicate a priority of PUSCH or PUCCH scheduled by DCI. Taking DCI format 0_1 as an example, the number of bits included in the priority indicator is as follows.

The priority indicator is 0 bit if a higher layer parameter _priorityIndicatorDCI-0-1_ is not configured, otherwise 1 bit. (Priority indicator - 0 bit if higher layer parameter _priorityIndicatorDCI-0-1_ is not configured; otherwise 1 bit as defined in Clause 9 in [5, TS 38.213].)

Parameters _priorityIndicatorDCI-1-1, priorityIndicatorDCI-1-2_ are used to configure the presence of a "priority indicator" in the DCI format 1_1/1_2. When the field is absent, then 0 bit for "priority indicator" in DCI format 1_1/1_2. The field _priorityIndicatorDCI-1-1_ applies to DCI format 1_1 and the field _priorityIndicatorDCI-1-2_ applies to DCI format 1_2 (see TS 38.212 [17], clause 7.3.1 and TS 38.213 [13], clause 9). (priorityIndicatorDCI-1-1, priorityIndicatorDCI-1-2:

Configure the presence of "priority indicator" in DCI format 1_1/1_2. When the field is absent in the IE, then 0 bit for "priority indicator" in DCI format 1_1/1_2. The field _priorityIndicatorDCI-1-1_ applies to DCI format 1_1 and the field _priorityIndicatorDCI-1-2_ applies to DCI format 1_2, respectively (see TS 38.212 [17], clause 7.3.1 and TS 38.213 [13] clause 9).)

In the related art, the BWP indicator, the open-loop power control parameter set indication and the priority indicator have been determined as Type-1 fields, that is, a single field is included in the DCI format 0_X or the DCI format 1_X to be used as the BWP indicator, the open-loop power control parameter set indication or the priority indicator. Then, there are still the following problems that need to be solved.

1. How to determine the number of bits for the single BWP indicator, open-loop power control parameter set indication, and priority indicator included in the DCI format 0_X/1_X? Considering that the BWP indicator, the open-loop power control parameter set indication, and the priority indicator are all related to BWP-specific transmission configuration parameters, and different cells may configure different related transmission configuration parameters, it is necessary to determine how to determine the number of bits of a single field when the DCI format 0_X/1_X is used to schedule PDSCH/PUSCH of multiple cells.

2. After determining the number of bits for the single BWP indicator, the open-loop power control parameter set indication, and the priority indicator included in the DCI format 0_X/1_X, it is also necessary to determine how different codepoints of these fields are interpreted for different cells.

Based on the above problems, the present disclosure provides a method for indicating downlink control information, which clarifies how to determine the number of bits for a single field and how to interpret the single field.

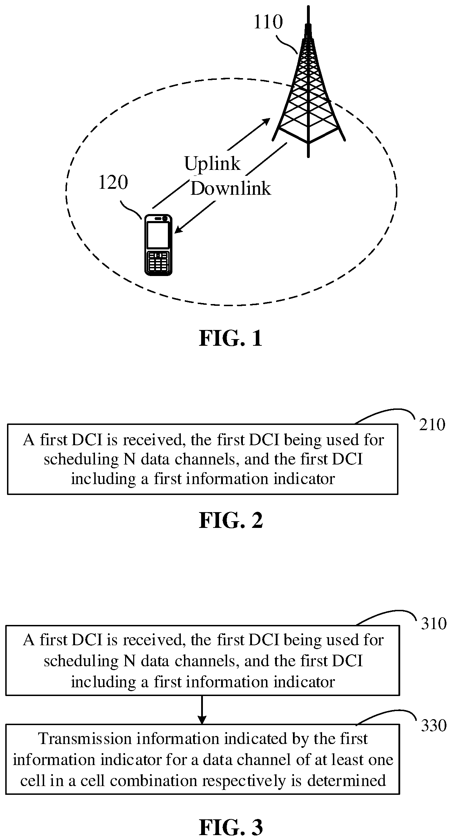

FIG. 1 illustrates a schematic diagram of a communication system provided by an exemplary embodiment of the present disclosure. The communication system 100 includes a network device 110 and a terminal device 120.

The network device 110 in the present disclosure provides wireless communication functions, and the network device 110 includes, but is not limited to, an Evolved Node B (eNB), a Radio Network Controller (RNC), a Node B (NB), a Base Station Controller (BSC), a Base Transceiver Station (BTS), a home base station (e.g., a Home Evolved Node B, or Home Node B, HNB), A Baseband Unit (BBU), an Access Point (AP), a wireless relay node, a wireless backhaul node, a Transmission Point (TP) or a Transmission and Reception Point (TRP) or the like in a Wireless Fidelity (Wi-Fi) system, a Next Generation Node B (gNB) or a Transmission Point (TRP or TP) in a 5th Generation (5G) mobile communication system, or, one or a group (including multiple antenna panels) antenna panels of a base station in a 5G system, or a network node constituting a gNB or a transmission point, such as a baseband unit (BBU) or a Distributed Unit (DU), or a base station in a Beyond Fifth Generation (B5G) or a 6th Generation (6G) mobile communication system, or a Core Network (CN), a Fronthaul, a Backhaul, a Radio Access Network (RAN), a network slice, or the like, or a serving cell, a Primary Cell (PCell), a Primary Secondary Cell (PSCell), a Special Cell (SpCell), a Secondary Cell (SCell), a neighboring cell, or the like of the terminal device.

The terminal device 120 in the present disclosure may also be referred to as user equipment (UE), an access terminal, a user unit, a user station, a mobile station, a mobile platform, a remote station, a remote terminal, a mobile device, a user terminal, a terminal, a wireless communication device, a user agent or a user device. The terminals include, but are not limited to, a handheld device, a wearable device, a vehicle-mounted device, an Internet of Things device, etc., such as a mobile phone, a tablet computer, an e-book reader, a laptop portable computer, a desktop computer, a television, a game console, a Mobile Internet Device (MID), an Augmented Reality (AR) terminal, and a Virtual Reality (VR) terminal, a Mixed Reality (MR) terminal, a wearable device, a handle, an electronic tag, a controller, a wireless terminal in Industrial Control, a wireless terminal in Self Driving, a wireless terminal in Remote Medical, a wireless terminal in Smart Grid, a wireless terminal in Transportation Safety, a wireless terminal in Smart City, a wireless terminal in Smart Home, a wireless terminal in Remote Medical Surgery, a cellular phone, a cordless phone, a Session Initiation Protocol (SIP) telephone, a Wireless Local Loop (WLL) station, a Personal Digital Assistant (PDA), a Set Top Box (STB), a Customer Premise device (CPE), etc.

The network device 110 and the terminal device 120 communicate with each other through some kind of air interface technology, such as a Uu interface.

For example, there are two communication scenarios between the network device 110 and the terminal device 120, including an uplink communication scenario and a downlink communication scenario. The uplink communication is to send a signal to the network device 110. The downlink communication is to send a signal to the terminal device 120.

The technical solution provided by the embodiments of the present disclosure may be applied to various communication systems. For example, a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a new radio (NR) system, an evolution system of NR system, an LTE-based access to unlicensed spectrum (LTE-U) system, a NR-based access to unlicensed spectrum (NR-U) system, a terrestrial network (NTN) system, a wireless local area network (WLAN), a wireless fidelity (WiFi), a cellular Internet of Things (IoT) system, a cellular passive IoT system, can also be applied to the subsequent evolution systems of 5G NR systems, a subsequent evolution system of the 5G NR system, and B5G, 6G and subsequent evolution systems. In some embodiments of the present disclosure, "NR" may also be referred to as a 5G NR system or a 5G system. The 5G mobile communication system may include a Non-Standalone networking (NSA) and/or a Standalone networking (SA).

The technical solutions provided by the embodiments of the present disclosure may also be applied to a Machine Type Communication (MTC), a Long Term Evolution-Machine (LTE-M), a device-to-device (D2D) network, a Machine-to-Machine (M2M) network, an Internet of Things (IoT) network, or other networks. The IoT network may include, for example, Internet of Vehicles. Communication manners in the Internet of Vehicles system are collectively referred to as vehicle to other device (V2X, X may represent anything). For example, the V2X may include Vehicle to Vehicle (V2V) communication, Vehicle to Infrastructure (V2I) communication, Vehicle to Pedestrian (V2P) communication, Vehicle to Network (V2N) communication, and the like.

The communication system provided by the present embodiment may be applied to, but is not limited to, at least one of the following communication scenarios: an uplink communication scenario, a downlink communication scenario, and a sidelink communication scenario.

The "set of cells" in the present embodiment refers to a set of cells to which the scheduled cell combination belongs, and may also be referred to as a first set of cells. The "cell combination" in the present embodiment refers to a scheduled cell combination, and may also be referred to as a first cell combination.

FIG. 2 illustrates a schematic flowchart of a method for indicating downlink control information provided by exemplary embodiments of the present disclosure. The method is illustrated schematically by taking as an example the execution by the terminal device 120 illustrated in FIG. 1. The method includes at least some of the following operations.

At operation 210, a first DCI is received, where the first DCI is used for scheduling N data channels, and the first DCI includes a first information indicator.

The first information indicator is used to indicate transmission information of at least one of the N data channels scheduled, or, the first information indicator is used to indicate transmission information respectively for a data channel of at least one cell in a scheduled cell combination. The scheduled cell combination is a combination of N cells, and the N data channels correspond to the N cells, N being a positive integer, that is, N is equal to 1 and/or N is greater than 1.

The data channel includes PDSCH or PUSCH, N PDSCHs or N PUSCHs correspond to N cells, N cells belong to a cell combination, and the cell combination belongs to a set of cells.

In summary, in the method provided by the present disclosure, the terminal device receives a first DCI for scheduling N data channels, and the first DCI includes a first information indicator, so that the terminal device can acquire transmission information respectively indicated for the data channel of at least one cell in the scheduled cell combination.

FIG. 3 illustrates a schematic flowchart of a method for indicating downlink control information provided by exemplary embodiments of the present disclosure. The method is illustrated schematically by taking as an example the execution by the terminal device 120 illustrated in FIG. 1. The method includes at least some of the following operations.

At operation 310, a first DCI is received, where the first DCI is used for scheduling N data channels, and the first DCI includes a first information indicator.

The first information indicator is used to indicate transmission information respectively for a data channel of at least one cell in the scheduled cell combination, or to indicate transmission information respectively for N data channels scheduled. The scheduled cell combination is a combination of N cells, and the N data channels correspond to the N cells, N being a positive integer. That is, N is equal to 1 and/or N is greater than 1.

The data channel is PDSCH or PUSCH, N PDSCHs or N PUSCHs correspond to N cells, N cells belong to a cell combination, and the cell combination belongs to a set of cells.

At operation 330, transmission information indicated by the first information indicator for a data channel of at least one cell in a scheduled cell combination respectively is determined.

The first information indicator is used to indicate transmission information respectively for a data channel of at least one cell in a scheduled cell combination.

The transmission information includes at least one of BWP-related information (for example, BWP information on which the data channel is located), open-loop power control parameter-related information (for example, open-loop power control parameter information used for transmitting data channel), and priority-related information (for example, priority information corresponding to the data channel). The priority-related information includes a priority of a data channel scheduled by the first DCI.

In some embodiments, transmission information indicated by the first information indicator respectively for a data channel of at least one cell in a scheduled cell combination is determined based on a first number of bits for the first information indicator. The terminal device is supported to determine transmission information indicated respectively for the data channel of at least one cell in the scheduled cell combination based on the first number of bits, and transmission information may be indicated respectively for the data channel of at least one cell by less DCI resources.

In some embodiments, the first number of bits is determined based on at least one of:

- a second number of bits corresponding to each cell in a set of cells;
- a transmission configuration parameter corresponding to the cell in the set of cells, the transmission configuration parameter being used to configure information related to the transmission information;
- a number of elements included in the transmission configuration parameter corresponding to the cell in the set of cells;

or

- a bit configuration parameter, the bit configuration parameter being used to indicate the first number of bits for the first information indicator.

Optionally, the first number of bits is determined based on at least one of:

- at least one second number of bits corresponding to at least one cell in the set of cells, the at least one second number of bits corresponding to the at least one cell in the set of cells being greater than 0;
- at least one transmission configuration parameter corresponding to the at least one cell in the set of cells, the at least one cell in the set of cells being configured with the at least one transmission configuration parameter;
- at least one number of elements included in the at least one transmission configuration parameter corresponding to the at least one cell in the set of cells, the at least one number of elements included in the at least one transmission configuration parameter corresponding to the at least one cell in the set of cells being greater than 0.

It should be understood that if the transmission configuration parameter is the BWP configuration parameter, then the number of elements included in the transmission configuration parameter corresponding to at least one cell in the set of cells is the number of BWPs, then the number of elements (excluding the initial BWP) included in the transmission configuration parameter corresponding to at least one cell in the set of cells is greater than 0, or, the number of elements (including the initial BWP) included in the transmission configuration parameter corresponding to at least one cell in the set of cells is greater than 1.

- a bit configuration parameter, the bit configuration parameter being used to indicate the first number of bits for the first information indicator.

Optionally, the first number of bits is determined based on at least one of:

- a second number of bits corresponding to each cell in the cell combination;
- a transmission configuration parameter corresponding to the cell in the cell combination, the transmission configuration parameter being used to configure information related to the transmission information;
- a number of elements included in the transmission configuration parameter corresponding to the cell in the cell combination; or
- a bit configuration parameter, the bit configuration parameter being used to indicate the first number of bits for the first information indicator.

Optionally, the first number of bits is determined based on at least one of:

- at least one second number of bits corresponding to at least one cell in the cell combination, the at least one second number of bits corresponding to the at least one cell in the cell combination being greater than 0;
- at least one transmission configuration parameter corresponding to the at least one cell in the cell combination, the at least one cell in the cell combination being configured with the at least one transmission configuration parameter;
- at least one number of elements included in the at least one transmission configuration parameter corresponding to the at least one cell in the cell combination, the at least one number of elements included in the at least one transmission configuration parameter corresponding to the at least one cell in the cell combination being greater than 0.

It should be understood that if the transmission configuration parameter is the BWP configuration parameter, then the number of elements included in the transmission configuration parameter corresponding to at least one cell in the cell combination is the number of BWPs, then the number of elements (excluding the initial BWP) included in the transmission configuration parameter corresponding to at least one cell in the cell combination is greater than 0, or, the number of elements (including the initial BWP) included in the transmission configuration parameter corresponding to at least one cell in the cell combination is greater than 1.

- a bit configuration parameter, the bit configuration parameter being used to indicate the first number of bits for the first information indicator.

The cell combination belongs to the set of cells.

In some embodiments, the transmission configuration parameter is a configuration parameter related to transmission information. If the transmission configuration parameter is a BWP configuration parameter, the transmission configuration parameter includes a configuration parameter related to at least one of: the number of BWPs, an index of the BWP, and a data channel (such as PDSCH and PUSCH) related to the BWP. If the transmission configuration parameter is an open-loop power control configuration parameter, the transmission configuration parameter includes a configuration parameter related to at least one of: configuring an open-loop power control parameter set indication and the number of bits for configuring the open-loop power control parameter set indication. If the transmission configuration parameter is a priority configuration parameter, the transmission configuration parameter includes a configuration parameter related to configuring a priority indicator.

The "determination manner of a number of bits" in the present disclosure refers to a manner of determining the number of bits or a step of determining the number of bits. A form of determination in tabular, and/or a form of determination in text is included.

In some embodiments, the second number of bits is determined according to at least one of: a determination manner of the number of bits for the information field corresponding to the first information indicator in the second DCI, and a transmission configuration parameter corresponding to each cell in the set of cells. The second DCI is used for scheduling one data channel, and the second DCI includes at least one of DCI format 0_1, DCI format 1_1, DCI format 0_2, and DCI format 1_2.

Optionally, the determination manner of the second number of bits is: a determination manner of a number of bits for an information field corresponding to a data channel of each cell in the at least one cell under separate scheduling. The information field is an information field corresponding to the first information indicator, and the number of bits for the information field is the number of bits for the information field corresponding to the first information indicator.

Optionally, the second number of bits is determined according to:

- A case where the first information indicator includes a BWP indicator

When the number of BWPs $n_{BWP,RRC}$ (excluding the initial BWP) configured by the RRC signaling in the first cell is less than or equal to 3, the second number of bits corresponding to the first cell is $\lceil \log_2(n_{BWP}) \rceil$, where $n_{BWP} = n_{BWP,RRC} + 1$. The first cell is any cell in the cell combination.

When the number of BWPs $n_{BWP,RRC}$ (excluding the initial BWP) configured by the RRC signaling in the first cell is greater than 3 (i.e., 4), the second number of bits corresponding to the first cell is $\lceil \log_2(n_{BWP}) \rceil$, where $n_{BWP} = n_{BWP,RRC}$.

- A case where the first information indicator includes an open-loop power control parameter set indication

If the first parameter is not configured for the first cell, the second number of bits corresponding to the first cell is 0.

The first parameter is used to configure the open-loop power control parameter set indication, for example, the first parameter is *p0-PUSCH-SetList.*

If the first parameter is configured for the first cell, the second number of bits corresponding to the first cell is 1 or 2.

If the SRS resource indicator is included in the first DCI, the second number of bits corresponding to the first cell is 1.

If the SRS resource indicator is not included in the first DCI, the second number of bits corresponding to the first cell is 1 or 2 depending on the value of the second parameter. The second parameter is used to configure the number of bits for the open-loop power control parameter set indication, for example, the second parameter is at least one of *olpc-ParameterSetDCI-0-X* and *olpc-ParameterSetDCI-1-X.*

- A case where the first information indicator includes a priority indicator

The priority includes a priority of a data channel scheduled by the first DCI.

If the third parameter is not configured for the first cell, the second number of bits corresponding to the first cell is 0.

The third parameter is used to configure the priority indicator, for example, the third parameter includes at least one of *priorityIndicatorDCI-0-X* and *priorityIndicatorDCI-1-X.*

If the third parameter is configured for the first cell, the second number of bits corresponding to the first cell is 1.

In some embodiments, the first number of bits is at least one or any one of the following:

- a maximum value in the second numbers of bits corresponding to respective cells in the set of cells;
- a minimum value in the second numbers of bits corresponding to respective cells in the set of cells;
- an average value of the second numbers of bits corresponding to respective cells in the set of cells;

- a median value of the second numbers of bits corresponding to respective cells in the set of cells;
- a maximum value in the transmission configuration parameters corresponding to respective cells in the set of cells;
- a minimum value in the transmission configuration parameters corresponding to respective cells in the set of cells;
- an average value of the transmission configuration parameters corresponding to respective cells in the set of cells;
- a median value of the transmission configuration parameters corresponding to respective cells in the set of cells;
- a maximum value in numbers of elements included in the transmission configuration parameters corresponding to the respective cells in the set of cells;

The elements included in the transmission configuration parameter refer to a configuration content in the transmission configuration parameter. When the transmission configuration parameter is a BWP configuration parameter, the number of elements refers to the number of BWPs, and may further refer to the number of BWPs other than the initial BWP.

- a minimum value in the numbers of elements included in the transmission configuration parameters corresponding to the respective cells in the set of cells;
- an average value of the numbers of elements included in the transmission configuration parameters corresponding to the respective cells in the set of cells; or
- a median value of the numbers of elements included in the transmission configuration parameters corresponding to the respective cells in the set of cells.

Optionally, the first number of bits is at least one or any one of the following:

- a maximum value in at least one second number of bits corresponding to the at least one cell in the set of cells, the at least one second number of bits corresponding to the at least one cell in the set of cells being greater than 0;
- a minimum value in at least one second number of bits corresponding to the at least one cell in the set of cells, the at least one second number of bits corresponding to the at least one cell in the set of cells being greater than 0;
- an average value of at least one second number of bits corresponding to the at least one cell in the set of cells, the at least one second number of bits corresponding to the at least one cell in the set of cells being greater than 0;
- a median value of at least one second number of bits corresponding to the at least one cell in the set of cells, the at least one second number of bits corresponding to the at least one cell in the set of cells being greater than 0;
- a maximum value in at least one transmission configuration parameter corresponding to the at least one cell in the set of cells, the at least one cell in the set of cells being configured with the at least one transmission configuration parameter;
- a minimum value in at least one transmission configuration parameter corresponding to the at least one cell in the set of cells, the at least one cell in the set of cells being configured with the at least one transmission configuration parameter;
- an average value of at least one transmission configuration parameter corresponding to the at least one cell in the set of cells, the at least one cell in the set of cells being configured with the at least one transmission configuration parameter;
- a median value of at least one transmission configuration parameter corresponding to the at least one cell in the set of cells, the at least one cell in the set of cells being configured with the at least one transmission configuration parameter;
- a maximum value in at least one number of elements included in the at least one transmission configuration parameter corresponding to the at least one cell in the set of cells, the at least one number of elements included in the at least one transmission configuration parameter corresponding to the at least one cell in the set of cells being greater than 0;
- a minimum value in at least one number of elements included in the at least one transmission configuration parameter corresponding to the at least one cell in the set of cells, the at least one number of elements included in the at least one transmission configuration parameter corresponding to the at least one cell in the set of cells being greater than 0;
- an average value of at least one number of elements included in the at least one transmission configuration parameter corresponding to the at least one cell in the set of cells, the at least one number of elements included in the at least one transmission configuration parameter corresponding to the at least one cell in the set of cells being greater than 0; or
- a median value of at least one number of elements included in the at least one transmission configuration parameter corresponding to the at least one cell in the set of cells, the at least one number of elements included in the at least one transmission configuration parameter corresponding to the at least one cell in the set of cells being greater than 0.

Optionally, the first number of bits is at least one or any one of the following:

- a maximum value in the second numbers of bits corresponding to respective cells in the cell combination;
- a minimum value in the second numbers of bits corresponding to respective cells in the cell combination;

- an average value of the second numbers of bits corresponding to respective cells in the cell combination;
- a median value of the second numbers of bits corresponding to respective cells in the cell combination;
- a maximum value in the transmission configuration parameters corresponding to respective cells in the cell combination;
- a minimum value in the transmission configuration parameters corresponding to respective cells in the cell combination;
- an average value of the transmission configuration parameters corresponding to respective cells in the cell combination;
- a median value of the transmission configuration parameters corresponding to respective cells in the cell combination;
- a maximum value in numbers of elements included in the transmission configuration parameters corresponding to the respective cells in the cell combination;
- a minimum value in the numbers of elements included in the transmission configuration parameters corresponding to the respective cells in the cell combination;
- an average value of the numbers of elements included in the transmission configuration parameter corresponding to the respective cells in the cell combination; or
- a median value of the numbers of elements included in the transmission configuration parameter corresponding to the respective cells in the cell combination.

Optionally, the first number of bits is at least one or any one of the following:

- a maximum value in at least one second number of bits corresponding to the at least one cell in the cell combination, the at least one second number of bits corresponding to the at least one cell in the cell combination being greater than 0;
- a minimum value in at least one second number of bits corresponding to the at least one cell in the cell combination, the at least one second number of bits corresponding to the at least one cell in the cell combination being greater than 0;
- an average value of at least one second number of bits corresponding to the at least one cell in the cell combination, the at least one second number of bits corresponding to the at least one cell in the cell combination being greater than 0;
- a median value of at least one second number of bits corresponding to the at least one cell in the cell combination, the at least one second number of bits corresponding to the at least one cell in the cell combination being greater than 0;
- a maximum value in at least one transmission configuration parameter corresponding to the at least one cell in the cell combination, the at least one cell in the cell combination being configured with the at least one transmission configuration parameter;
- a minimum value in at least one transmission configuration parameter corresponding to the at least one cell in the cell combination, the at least one cell in the cell combination being configured with the at least one transmission configuration parameter;
- an average value of at least one transmission configuration parameter corresponding to the at least one cell in the cell combination, the at least one cell in the cell combination being configured with the at least one transmission configuration parameter;
- a median value of at least one transmission configuration parameter corresponding to the at least one cell in the cell combination, the at least one cell in the cell combination being configured with the at least one transmission configuration parameter;
- a maximum value in at least one number of elements included in the at least one transmission configuration parameter corresponding to the at least one cell in the cell combination, the at least one number of elements included in the at least one transmission configuration parameter corresponding to the at least one cell in the cell combination being greater than 0;
- a minimum value in at least one number of elements included in the at least one transmission configuration parameter corresponding to the at least one cell in the cell combination, the at least one number of elements included in the at least one transmission configuration parameter corresponding to the at least one cell in the cell combination being greater than 0;
- an average value of at least one number of elements included in the at least one transmission configuration parameter corresponding to the at least one cell in the cell combination, the at least one number of elements included in the at least one transmission configuration parameter corresponding to the at least one cell in the cell combination being greater than 0; or
- a median value of at least one number of elements included in the at least one transmission configuration parameter corresponding to the at least one cell in the cell combination, the at least one number of elements included in the at least one transmission configuration parameter corresponding to the at least one cell in the cell combination being greater than 0.

In some embodiments, the terminal device does not expect at least one of the following:

- second numbers of bits corresponding to respective cells in the set of cells are different;
- transmission configuration parameters corresponding to the respective cells in the set of cells are different; or
- numbers of elements included in the transmission configuration parameters corresponding to the respective cells in the set of cells are different.

Optionally, the terminal device does not expect at least one of the following:

- at least one second number of bits corresponding to at least one cell in the set of cells is different from each other, the at least one second number of bits corresponding to the at least one cell in the set of cells being greater than 0;
- at least one transmission configuration parameter corresponding to the at least one cell in the set of cells is different from each other, the at least one cell in the set of cells being configured with the at least one transmission configuration parameter; or
- at least one number of elements included in the at least one transmission configuration parameter corresponding to the at least one cell in the set of cells is different from each other, the at least one number of elements included in the at least one transmission configuration parameter corresponding to the at least one cell in the set of cells being greater than 0.

Optionally, the terminal device does not expect at least one of the following:

- second numbers of bits corresponding to respective cells in the cell combination are different;
- transmission configuration parameters corresponding to the respective cells in the cell combination are different; or
- numbers of elements included in the transmission configuration parameters corresponding to the respective cells in the cell combination are different.

Optionally, the terminal device does not expect at least one of the following:

- at least one second number of bits corresponding to at least one cell in the cell combination is different from each other, the at least one second number of bits corresponding to the at least one cell in the cell combination being greater than 0;
- at least one transmission configuration parameter corresponding to the at least one cell in the cell combination is different from each other, the at least one cell in the cell combination being configured with the at least one transmission configuration parameter; or
- at least one number of elements included in the at least one transmission configuration parameter corresponding to the at least one cell in the cell combination is different from each other, the at least one number of elements included in the at least one transmission configuration parameter corresponding to the at least one cell in the cell combination being greater than 0.

In some embodiments, the terminal device expects at least one of the following:

- second numbers of bits corresponding to respective cells in the set of cells are the same;
- transmission configuration parameters corresponding to the respective cells in the set of cells are the same; or
- numbers of elements included in the transmission configuration parameters corresponding to the respective cells in the set of cells are the same.

Optionally, the terminal device expects at least one of the following:

- at least one second number of bits corresponding to at least one cell in the set of cells is the same, the at least one second number of bits corresponding to the at least one cell in the set of cells being greater than 0;
- at least one transmission configuration parameter corresponding to the at least one cell in the set of cells is the same, the at least one cell in the set of cells being configured with the at least one transmission configuration parameter; or
- at least one number of elements included in the at least one transmission configuration parameter corresponding to the at least one cell in the set of cells is the same, the at least one number of elements included in the at least one transmission configuration parameter corresponding to the at least one cell in the set of cells being greater than 0.

Optionally, the terminal device expects at least one of the following:

- second numbers of bits corresponding to respective cells in the cell combination are the same;
- transmission configuration parameters corresponding to the respective cells in the cell combination are the same; or
- numbers of elements included in the transmission configuration parameters corresponding to the respective cells in the cell combination are the same.

Optionally, the terminal device expects at least one of the following:

- at least one second number of bits corresponding to at least one cell in the cell combination is the same, the at least one second number of bits corresponding to the at least one cell in the cell combination being greater than 0;
- at least one transmission configuration parameter corresponding to the at least one cell in the cell combination is the same, the at least one cell in the cell combination being configured with the at least one transmission configuration parameter; or
- at least one number of elements included in the at least one transmission configuration parameter corresponding to the at least one cell in the cell combination is the same, the at least one number of elements included in the at least one transmission configuration parameter corresponding to the at least one cell in the cell combination being greater than 0.

In some embodiments, transmission information indicated by the first information indicator respectively for a data channel of at least one cell in a scheduled cell combination is determined based on at least one of the following:

- a second number of bits corresponding to each cell in the cell combination;
- a transmission configuration parameter corresponding to the cell in the cell combination, the transmission configuration parameter being used to configure information related to the transmission information; or
- a first number of bits for the first information indicator.

The second number of bits is determined according to at least one of: a determination manner of a number of bits for an information field corresponding to the first information indicator in the second DCI, or a transmission configuration parameter corresponding to each cell in the set of cells. The second DCI is used to schedule one data channel.

Optionally, the determination manner of the second number of bits is: a determination manner of a number of bits for an information field corresponding to a data channel of each cell in the at least one cell under separate scheduling.

In some embodiments, in a case that a second number of bits corresponding to a first cell is zero, the first information indicator does not indicate transmission information for a data channel of the first cell; and/or in a case that the second number of bits corresponding to the first cell is greater than zero, the first information indicator indicates the transmission information for the data channel of the first cell;

The first cell is any cell in the cell combination.

In some embodiments, a case where the second number of bits is zero is equivalent to at least one of the following cases:

- When the first information indicator is used to indicate transmission information of the BWP, the first cell is not configured with a BWP other than the initial BWP;
- When the first information indicator is used to indicate configuration information of the open-loop power control parameter, the first parameter corresponding to the first cell is not configured, where the first parameter is used to configure the open-loop power control parameter set indication, for example, the first parameter is *p0-PUSCH-SetList;*
- When the first information indicator is used to indicate configuration information of the priority, the third parameter corresponding to the first cell is not configured, where the third parameter is used to configure the priority indicator, for example, the third parameter is *priorityIndicatorDCI-0-X.*

In some embodiments, the first information indicator does not indicate transmission information for a data channel of the first cell, which may be understood that the first information indicator does not apply to the data channel of the first cell. It may also be understood that the transmission information indicated by the first information indicator for the data channel of the first cell is empty or default information.

Similarly, the first information indicator indicates transmission information for a data channel of the first cell, which may be understood that the first information indicator applies to the data channel of the first cell. It may also be understood that the transmission information indicated by the first information indicator for the data channel of the first cell is non-empty.

In some embodiments, a second number of bits corresponding to a first cell is X, the first cell is any cell in the cell combination, and the first number of bits for the first information indicator is Y bits.

When a codepoint of the first information indicator is a first codepoint, transmission information indicated by the first information indicator for the data channel of the first cell is determined based on an interpretation manner corresponding to the first codepoint. Optionally, the transmission information indicated by the first information indicator for the data channel of the first cell is determined based on an interpretation manner corresponding to the first codepoint and a transmission configuration parameter corresponding to each cell in the cell combination.

X is an integer greater than or equal to 0, Y is an integer greater than or equal to 0, and the first codepoint refers to first m codepoints in codepoints corresponding to the Y bits in the first information indicator. In some embodiments, m is $2^X$, or an integer less than $2^X$, or an integer greater than $2^X$. But this does not imply any limitation on the value of m.

The "interpretation manner" in the present disclosure includes a manner of interpreting codepoints, or a mapping relationship between codepoints and transmission information. For example, the mapping relationship between the codepoints and the transmission information is provided in the form of a table. Optionally, the mapping relationship between the codepoints and the transmission information is provided in the form of a literal description.

In some embodiments, the interpretation manner corresponding to the first codepoint includes: an interpretation manner of an information field corresponding to the first information indicator in a second DCI, the second DCI is used for scheduling one data channel, and the second DCI includes at least one of DCI format 0_1, DCI format 1_1, DCI format 0_2, and DCI format 1_2.

Optionally, the interpretation manner corresponding to the first codepoint includes a determination manner of a number of bits for an information field corresponding to a data channel of each cell in the at least one cell under separate scheduling; or a determination manner of a number of bits for an information field corresponding to a data channel of a first cell under separate scheduling.

Optionally, the interpretation manner corresponding to the first codepoint is as follows.

- A case where the first information indicator includes a BWP indicator

When the number of BWPs $n_{BWP,RRC}$ (excluding the initial BWP) configured by the RRC signaling in the first cell is less than or equal to 3, the second number of bits corresponding to the first cell is $\lceil \log_2(n_{BWP}) \rceil$ , where $n_{BWP} = n_{BWP,RRC} + 1$. The mapping relationship between the BWP indicators and the BWP identities is referenced in Table 2.

When the number of BWPs $n_{BWP,RRC}$ (excluding the initial BWP) configured by the RRC signaling in the first cell is greater than 3 (i.e., 4), the second number of bits corresponding to the first cell is $\lceil \log_2(n_{BWP}) \rceil$ , where $n_{BWP} = n_{BWP,RRC}$ . The mapping relationship between BWP indicators and BWP identities is referenced in Table 3.

- A case where the first information indicator includes an open-loop power control parameter set indication

A case where there is no SRI in the first DCI:

If a first parameter is configured, and the first parameter is used to configure the open-loop power control parameter set indication, for example, the first parameter is *p0-PUSCH-Set,* the first information indicator included in the first DCI is the open-loop power control parameter set indication.

i) When the first information field is "0" or "00", the terminal device determines the P0 value according to the following parameter: a first *P0-PUSCH-AlphaSet* in *p0-AlphaSets.*
ii) When the first information field is "1" or "01", the terminal device determines the P0 value according to the following parameter: a first value in *PO-PUSCH-Set* with the lowest *p0-PUSCH-SetID* value.
iii) When the first information field is "10", the terminal device determines the P0 value according to the following parameter: a second value in *PO-PUSCH-Set* with the lowest *p0-PUSCH-SetID* value.

If the first parameter is not configured, the terminal device determines the P0 value according to the following parameter: a first *P0-PUSCH-AlphaSet* in *p0-AlphaSets.*

A case where there is SRI in the first DCI:

i) When the first information field is "1", the terminal device determines the P0 value according to the following parameter: a first value in *PO-PUSCH-Set* with a *p0-PUSCH-SetId* value mapped to the SRI field value.
ii) Otherwise, the terminal device determines the P0 value according to the following parameter: *p0-PUSCH-AlphaSetId* value that is mapped to the SRI field value.

- A case where the first information indicator includes a priority indicator

If the third parameter is configured, and the third parameter is used to configure the priority indicator, for example, the third parameter is *priorityIndicatorDCI-0-X* or *priorityIndicatorDCI-1-X,* the priority indicator is 1 bit, and for details, please refer to the related art [5, TS 38.213].

In some embodiments, a second number of bits corresponding to a first cell is X, the first cell is any cell in the cell combination, and the first number of bits for the first information indicator is Y.

In a case that a codepoint of the first information indicator is a second codepoint, the first information indicator is ignored; that is, the first information indicator is not interpreted.

The second codepoint refers to a codepoint in codepoints corresponding to the Y bits other than a first codepoint, and the first codepoint refers to first m codepoints in codepoints corresponding to the Y bits in the first information indicator.

In some embodiments, a second number of bits corresponding to a first cell is X, the first cell is any cell in the cell combination, and the first number of bits for the first information indicator is Y.

In a case that a codepoint of the first information indicator is the second codepoint, transmission information indicated by the first information indicator for the data channel of the first cell is determined based on an interpretation manner of a codepoint after modulo operation. Optionally, the transmission information indicated by the first information indicator for the data channel of the first cell is determined based on the interpretation manner of the codepoint after modulo operation and a transmission configuration parameter corresponding to each cell in the cell combination, and the codepoint after modulo operation is a modulo result of the second codepoint based on $2^X$.

The second codepoint refers to the codepoint in codepoints corresponding to the Y bits other than the first codepoint, and the first codepoint refers to first m codepoints in codepoints corresponding to the Y bits in the first information indicator.

In some embodiments, the interpretation manner corresponding to the codepoint after modulo operation includes: an interpretation manner of an information field corresponding to the first information indicator in a second DCI, the second DCI being used for scheduling one data channel;

or, the interpretation manner includes a determination manner of a number of bits for an information field corresponding to a data channel of each cell in the at least one cell under separate scheduling; or a determination manner of a number of bits for an information field corresponding to a data channel of a first cell under separate scheduling.

In some embodiments, Y is greater than $2^X$.

In some embodiments, the second number of bits corresponding to the first cell is X, the first cell is any cell in the cell combination, and the first number of bits for the first information indicator is Y.

Transmission information indicated by the first information indicator for the data channel of the first cell is determined based on the interpretation manner of the third codepoint.

The third codepoint is a codepoint corresponding to the Y bits in the first information indicator.

In some embodiments, the interpretation manner corresponding to the third codepoint includes: an interpretation manner of an information field corresponding to the first information indicator in a second DCI, the second DCI being used for scheduling one data channel;

or, the interpretation manner includes a determination manner of a number of bits for an information field corresponding to a data channel of each cell in the at least one cell under separate scheduling; or a determination manner of a number of bits for an information field corresponding to a data channel of a first cell under separate scheduling.

In some embodiments, Y is less than or equal to $2^X$.

In some embodiments, a transmission configuration parameter corresponding to the at least one cell in the cell combination includes: pieces of transmission information corresponding to at least two sets of configurations.

Transmission information corresponding to at least one cell belonging to a same set of configurations corresponds to a same codepoint, the codepoint is a codepoint of the first information indicator, and the first DCI is used to schedule the transmission information that corresponds to the at least one cell belonging to the same set of configurations.

In some embodiments, the first information indicator includes at least one of:

- a bandwidth part (BWP) indicator;
- an open-loop power control parameter set indication; or
- a priority indicator.

In some embodiments, the transmission configuration parameter includes at least one of:

- a configuration parameter of BWP;
- a parameter of an open-loop power control set list;
- the first DCI including the SRS resource indicator;
- the first DCI not including the SRS resource indicator;
- a transmission configuration parameter for configuring a number of bits for an open-loop power control parameter set indication; or

- a priority configuration parameter.

In summary, in the method provided by the present disclosure, the terminal device receives a first DCI for scheduling N data channels, and the first DCI includes a first information indicator, so that the terminal device can acquire transmission information respectively indicated for the data channel of at least one cell in the scheduled cell combination. When the first DCI schedules N data channels, the terminal device is supported to interpret the transmission information of each data channel scheduled or the transmission information of the data channel of each cell in the scheduled cell combination.

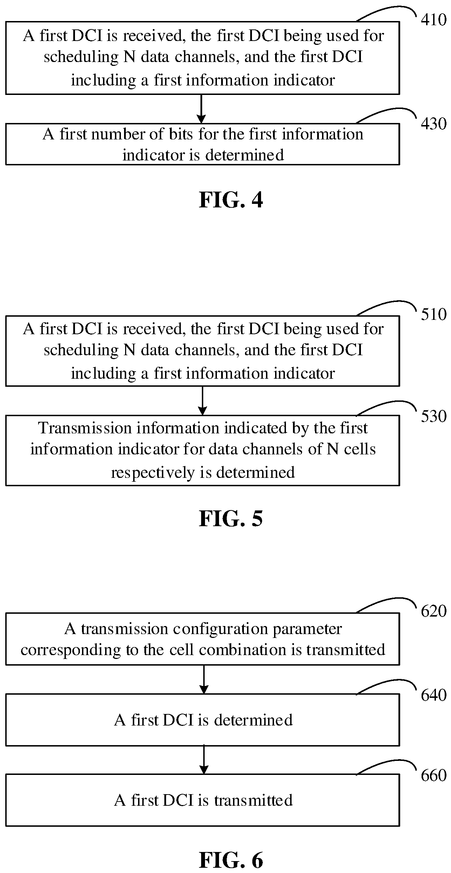

FIG. 4 illustrates a schematic flowchart of a method for indicating downlink control information provided by exemplary embodiments of the present disclosure. The method is illustrated schematically by taking as an example the execution by the terminal device 120 illustrated in FIG. 1. The method includes at least some of the following operations.

At operation 410, a first DCI is received, where the first DCI is used for scheduling N data channels, and the first DCI includes a first information indicator.

The first information indicator is used to indicate transmission information respectively for a data channel of at least one cell in a scheduled cell combination. The scheduled cell combination is a combination of N cells, and the N data channels correspond to the N cells, N being a positive integer. That is, N is equal to 1 and/or N is greater than 1.

The data channel is PDSCH or PUSCH, N PDSCHs or N PUSCHs correspond to N cells, N cells belong to a cell combination, the cell combination belongs to a set of cells, the set of cells includes M cells, M is greater than or equal to N, and M is a positive integer.

At operation 430, a first number of bits for the first information indicator is determined.

The terminal device determines the first number of bits for the first information indicator based on at least one of the following manners.

Manner (1): a second number of bits corresponding to each cell in a set of cells /a cell combination

The following explanation takes the number of second bits corresponding to each cell in the set of cells as an example. If the first number of bits is determined by the second number of bits corresponding to each cell in the cell combination, the related content of determining the first number of bits by the second number of bits corresponding to each cell in the set of cells may be referred to.

According to the manner of determining the number of bits for the information field corresponding to the first information indicator in the legacy DCI format, the second number of bits corresponding to each cell in the set of cells is determined. The legacy DCI format includes at least one of DCI format 0_1, DCI format 0_2, DCI format 1_1, and DCI format 1_2.

Optionally, when separately scheduling the data channel of each cell according to one piece of DCI, the second number of bits corresponding to each cell in the set of cells is determined according to the determination manner of determining the number of bits for the DCI information field according to the transmission information of each cell.

Optionally, the number of second bits corresponding to each cell in the set of cells is determined according to the following manners.

- A case where the first information indicator includes a BWP indicator

When the number of BWPs $n_{BWP,RRC}$ (excluding the initial BWP) configured by the RRC signaling in the first cell is less than or equal to 3, the second number of bits corresponding to the first cell is $\lceil \log_2(n_{BWP}) \rceil$, where $n_{BWP}$ = $n_{BWP,RRC}$ + 1.

When the number of BWPs $n_{BWP,RRC}$ (excluding the initial BWP) configured by the RRC signaling in the first cell is greater than 3 (i.e., 4), the second number of bits corresponding to the first cell is $\lceil \log_2(n_{BWP}) \rceil$, where $n_{BWP}$ = $n_{BWP,RRC}$.

- A case where the first information indicator includes an open-loop power control parameter set indication

If the first parameter is not configured for the first cell, the second number of bits corresponding to the first cell is 0.

The first parameter is used to configure the open-loop power control parameter set indication, for example, the first parameter is *p0-PUSCH-SetList.*

If the first parameter is configured for the first cell, the second number of bits corresponding to the first cell is 1 or 2.

If the SRS resource indicator is included in the first DCI, the second number of bits corresponding to the first cell is 1.

If the SRS resource indicator is not included in the first DCI, the second number of bits corresponding to the first cell is 1 or 2 depending on the value of the second parameter, and the second parameter is used to configure the number of bits for the open-loop power control parameter set indication, for example, the second parameter is *olpc-Parameter-SetDCI-0-X.*

- A case where the first information indicator includes a priority indicator

If the third parameter is not configured for the first cell, the second number of bits corresponding to the first cell is 0.

The third parameter is used to configure the priority indicator, for example, the third parameter is *priorityIndicatorDCI-0-X.*

If the third parameter is configured for the first cell, the second number of bits corresponding to the first cell is 1.

In some embodiments, if the format of the first DCI is DCI format 0_X, a determination manner of the number of bits for the information field corresponding to the DCI format 0_1/0_2 may be referred to. If the format of the first DCI is the DCI format 1_X, the determination manner of the number of bits for the information field corresponding to the DCI format 1_1/1_2 may be referred to.

For example, the first number of bits for the first information indicator in the first DCI is determined based on a maximum value or a minimum value among the second numbers of bits corresponding to all cells in the set of cells.

When the first number of bits for the first information indicator in the first DCI is determined based on the maximum value of the second numbers of bits corresponding to all cells in the set of cells, an indication of transmission information is very flexible, but it is necessary to additionally design a corresponding interpretation manner when a second number of bits corresponding to a certain cell in the set of cells is smaller than the first number of bits for the first information indicator.

When the first number of bits for the first information indicator in the first DCI is determined based on a minimum value of the second numbers of bits corresponding to all cells in the set of cells, the DCI overhead is small, but the flexibility for indicating transmission information is insufficient.

Manner (2): a transmission configuration parameter corresponding to each cell in a set of cells /a cell combination

The following explanation takes the transmission configuration parameter corresponding to each cell in the set of cells as an example. If the first number of bits is determined by the transmission configuration parameter corresponding to each cell in the cell combination, the related content of determining the first number of bits by the transmission configuration parameter corresponding to each cell in the set of cells may be referred to.

The transmission configuration parameter includes at least one of:

- a configuration parameter of BWP;
  such as the number of configured uplink BWPs or downlink BWPs (excluding initial BWPS).
- a parameter of an open-loop power control set list;
  such as a parameter *p0-PUSCH-SetList.*
- whether an SRS resource indicator is present in DCI format 0_X;
- a transmission configuration parameter for configuring a number of bits for the open-loop power control parameter set indication for each cell in the DCI format 0_X;
  such as *olpc-ParameterSetDCI-O-X.*
- a priority configuration parameter.
  such as a transmission configuration parameter used to configure whether or not a priority indicator is present in the DCI format 0_X/1_X for each cell, such as *priorityIndicatorDCI-0-X, priorityIndicatorDCI-1-X.*

For example, the first number of bits for the first information indicator in the first DCI is determined based on a maximum value or a minimum value among the transmission configuration parameters corresponding to all cells in the set of cells.

Taking the first information indicator including an open-loop power control parameter set indication, and the format of the first DCI being DCI format 0_X as an example, the first DCI configures a first parameter for a cell in a set of cells, for example, the first parameter is *p0-PUSCH-SetList,* the first information indicator does not include an SRS resource indicator, and the number of bits for the open-loop power control parameter set indication is configured by configuring a second parameter, for example, the second parameter is *olpc-ParameterSetDCI-0-X.* When some cells in the set of cells are configured with the second parameter of 1 and some cells are configured with the second parameter of 2, the maximum value of the transmission configuration parameters corresponding to all cells in the set of cells is 2 and the minimum value is 1. The first number of bits is 2 when the first number of bits is determined according to the maximum value, and the first number of bits is 1 when the first number of bits is determined according to the minimum value.

Taking the first information indicator including a priority indicator, and the format of the first DCI being DCI format 1_X as an example, the first DCI configures a third parameter for the cell in the set of cells, for example, the third parameter is *priorityIndicatorDCI-1-X.* As long as at least one cell in the set of cells is configured with the third parameter, the maximum value of the transmission configuration parameters corresponding to all cells in the set of cells is 1, and the first number of bits is 1. As long as at least one cell in the set of cells is not configured with the third parameter, the minimum value in the transmission configuration parameters corresponding to all cells in the set of cells is 0, and the first number of bits is 0.

When the first number of bits for the first information indicator in the first DCI is determined based on the maximum value or the minimum value in the transmission configuration parameters corresponding to respectively cells in the set of cells, the corresponding advantages and disadvantages may be described in "(1) a second number of bits corresponding to each cell in the set of cells", and the description thereof is not repeated here.

Manner (3): a number of elements included in the transmission configuration parameter corresponding to each cell in a set of cells /a cell combination

The following explanation takes the number of elements included in the transmission configuration parameter corresponding to each cell in the set of cells as an example. If the first number of bits is determined by the number of elements included in the transmission configuration parameter corresponding to each cell in the cell combination, the related content of determining the first number of bits by the number of elements included in the transmission configuration parameter corresponding to each cell in the set of cells may be referred to.

For example, the first number of bits for the first information indicator in the first DCI is determined based on a maximum value or a minimum value in the numbers of elements included in the transmission configuration parameters corresponding to all cells in the set of cells.

Taking the first information indicator including the BWP indicator as an example, the transmission configuration parameter is the BWP configuration parameter, and the number of elements refers to the number of BWPs excluding the initial BWP. If the maximum value of the numbers of BWPs (excluding the initial BWP) corresponding to respective cells in the set of cells is 4, the first number of bits is 2. If the minimum value of the numbers of BWPs (excluding the initial BWP) corresponding to respective cells in the set of cells is 1, the first number of bits is 1.

When the first number of bits for the first information indicator in the first DCI is determined based on the maximum value or the minimum value in the numbers of elements included in the transmission configuration parameters corresponding to respectively cells in the set of cells, the corresponding advantages and disadvantages may be described in "(1) a second number of bits corresponding to each cell in the set of cells", and the description thereof is not repeated here.

Manner (4): a bit configuration parameter

The bit configuration parameter is used to configure the first number of bits for the first information indicator.

Manner (5): the terminal device does not expect at least one of the following:

- second numbers of bits corresponding to respective cells in the set of cells are different;
- transmission configuration parameters corresponding to the respective cells in the set of cells are different;
- numbers of elements included in the transmission configuration parameters corresponding to the respective cells in the set of cells are different;
- second numbers of bits corresponding to respective cells in the cell combination are different;
- transmission configuration parameters corresponding to the respective cells in the cell combination are different; or
- numbers of elements included in the transmission configuration parameters corresponding to the respective cells in the cell combination are different.

That is, the second numbers of bits corresponding to respectively cells in the set of cells (cell combination) are the same, and/or the transmission configuration parameters corresponding to respectively cells in the set of cells (cell combination) are the same, and/or the numbers of elements included in the transmission configuration parameters corresponding to the respective cells in the set of cells (cell combination) are the same.

Based on the manner of determining the first number of bits in the manner (5), the problem of indication or interpretation caused by the different number of second bits corresponding to different cells in the set of cells/cell combination is avoided by the scheduling limitation.

Next, by way of example, a manner of determining the first number of bits for the first information indicator will be described.

- A case where the first information indicator includes a BWP indicator

For example, taking a set of cells including three cells: cell 1, cell 2, and cell 3 as an example, the BWP configuration of each cell is as follows (the following BWPs are all downlink BWPs or all uplink BWPs).

Cell 1: in addition to the initial BWP, the network device configures a UE specific BWP through higher layer parameters, and the corresponding BWP identity is 1, that is, BWP ID = 1. According to the manner of determining the second number of bits described above, the second number of bits corresponding to the cell 1 is calculated to be $\log_2 (1 + 1)$

= 1 bit.

Cell 2: in addition to the initial BWP, the network device configures three UE specific BWPs through higher layer parameters, and the corresponding BWP identities are 1, 2, and 3, that is, BWP ID = 1/2/3. According to the manner of determining the second number of bits described above, the second number of bits corresponding to the cell 2 is calculated to be $\log_2 (1 + 3) = 2$ bits.

Cell 3: in addition to the initial BWP, the network device configures three UE specific BWPs through higher layer parameters, and the corresponding BWP identities are 1, 2, 3 and 4, that is, BWP ID = 1/2/3/4. According to the manner of determining the second number of bits described above, the second number of bits corresponding to the cell 3 is calculated to be $\log_2 (4) = 2$ bits.

Taking the determination of the first number of bits according to the manner (1) as an example, if the first number of bits is determined based on the maximum value of the second numbers of bits corresponding to all cells in the set of cells, the first number of bits = max {1, 2, 2} = 2 bits. If the first number of bits is determined based on the minimum value of the second numbers of bits corresponding to all cells in the set of cells, the first number of bits = min {1, 2, 2} = 1 bit.

Taking the determination of the first number of bits according to the manner (2) as an example, assuming that the BWP configuration parameter of cell 1, cell 2, and cell 3 is, for example, the number of BWPs configured by a UE specific configuration signaling, the maximum value of the BWP configuration parameters in cell 1, cell 2, and cell 3 is 4, and the minimum value is 1. If the first number of bits is determined based on the maximum value of the BWP configuration parameters corresponding to all cells in the set of cells, the first number of bits = $\log_2 (4) = 2$ bits. If the first number of bits is determined based on the minimum value of the BWP configuration parameters corresponding to all cells in the set of cells, the first number of bits = $\log_2(1 + 1) = 1 = 1$ bit.

The contents of the manner (3) may be referred to the manner (2), and will not be repeatedly described.

Taking the determination of the first number of bits according to the manner (4) as an example, the terminal device is supported to determine the first number of bits based on bit configuration parameters by explicitly configuring the bit configuration parameters.

Taking the determination of the first number of bits according to the manner (5) as an example, the terminal device does not expect the second numbers of bits corresponding to cell 1, cell 2 and cell 3 to be different; or the terminal device does not expect the corresponding BWP configuration parameters of cell 1, cell 2, and cell 3 to be different, for example, the numbers of BWPs (excluding the initial BWP) configured by the UE specific BWP configuration signaling are different; or the terminal device does not expect the numbers of elements included in the BWP configuration parameters corresponding to cell 1, cell 2, and cell 3 to be different. In this way, the first number of bits is the same regardless of which cell is considered, and the terminal device may determine the first number of bits based on any cell in the set of cells.

- A case where the first information indicator includes an open-loop power control parameter set indication

For example, assuming that the set of cells includes three cells: cell 1, cell 2, and cell 3, an SRS resource indicator corresponding to cell 1, cell 2, and cell 3 is not present in the first DCI. The configuration of open-loop power control parameters of each cell is as follows.

Cell 1: Configured with open-loop power control set list parameters, such as *p0-PUSCH-SetList;* and the corresponding *olpc-ParameterSetDCI-0-X* is 1. According to the manner of determining the second number of bits described above, since the value of *olpc-ParameterSetDCI-0-X* is 1, the second number of bits corresponding to cell 1 is 1 bit.

Cell 2: Configured with open-loop power control set list parameters, such as *p0-PUSCH-SetList;* and the corresponding *olpc-ParameterSetDCI-0-X* is 2. According to the manner of determining the second number of bits described above, since the value of *olpc-ParameterSetDCI-0-X* is 2, the second number of bits corresponding to cell 2 is 2 bits.

Cell 3: The open-loop power control set list parameter is not configured. According to the manner of determining the second number of bits described above, the second number of bits corresponding to cell 3 is 0 bit.

Taking the determination of the first number of bits according to the manner (1) as an example, if the first number of bits is determined based on the maximum value of the open-loop power control set list parameters corresponding to all cells in the set of cells, the first number of bits = max {1, 2, 0} = 2 bits. If the first number of bits is determined based on the minimum value of the open-loop power control set list parameters corresponding to all cells in the set of cells, the first number of bits = min {1, 2, 0} = 0 bit. That is, when determining the first number of bits, the open-loop power control set list parameters corresponding to all cells in the set of cells are considered.

Optionally, only in the set of cells, cells having the second number of bits greater than 0, that is, cell 1 and cell 2, are determined according to the manner of determining the second number of bits described above. Then the first number of bits = max {1, 2} = 2 bits, or the first number of bits = min {1, 2} = 1 bit. That is, when determining the first number of bits, only an open-loop power control set list parameter corresponding to a cell in which the second number of bits of the cell is greater than 0 in the set of cells is considered, or only an open-loop power control set list parameter corresponding to a cell with the first parameter in the set of cells is considered, where the first parameter is used to configure the open-loop power control parameter set indication, for example, the first parameter is *p0-PUSCH-SetList.*

Taking the determination of the first number of bits according to the manner (2) as an example, assuming that there is no SRS resource indicator corresponding to cell 1, cell 2, and cell 3 in the first DCI, the second number of bits depends on whether the open-loop power control set list parameter configuration and a value of *olpc-ParameterSetDCI-0-X* are configured. Assuming that the open-loop power control set list parameters are configured in cell 1 and cell 2, the open-loop power control set list parameters are not configured in cell 3, the maximum value of *olpc-ParameterSetDCI-0-X* in cell 1 and cell 2 is 2. The minimum value of *olpc-ParameterSetDCI-0-X* in cell 1 and cell 2 is 1 if cell 3 that is not configured with open-loop power control set list parameters is not considered. The minimum value of *olpc-ParameterSetDCI-0-X* in cell 1, cell 2 and cell 3 is 0 if cell 3 that is not configured with open-loop power control set list parameters is considered.

The first number of bits is determined according to the maximum value of 2 of *olpc-ParameterSetDCI-0-X,* and the first number of bits is 2 bits. Optionally, the first number of bits is determined according to the minimum value of *olpc-ParameterSetDCI-0-X,* and in a case that the open-loop power control set list parameters corresponding to all cells in the set of cells is considered, the minimum value of *olpc-ParameterSetDCI-0-X* is 0, and the first number of bits is 0 bits. In a case that only the open-loop power control set list parameter corresponding to a cell having the second number of bits greater than 0 in the set of cells is considered, the minimum value of *olpc-ParameterSetDCI-0-X* is 1, and the first number of bits is 1 bit.

Taking the determination of the first number of bits according to the manner (5) as an example, if the cell 3 in which the open-loop power control set list parameters are not configured is considered, the terminal device does not expect the second numbers of bits corresponding to the cell 1, the cell 2, and the cell 3 to be different; or the terminal device does not expect the configuration parameters related to the open-loop power control corresponding to the cell 1, the cell 2, and the cell 3 to be different. For example, the cell 1, the cell 2, and the cell 3 simultaneously satisfy at least one of the following: the open-loop power control set list parameters are configured, the SRS resource indicator corresponding to a cell is present in the first DCI, the SRS resource indicator corresponding to the cell is not present in the first DCI, and values of the *olpc-ParameterSetDCI-0-X* corresponding to cell 1, cell 2, and cell 3 are the same.

If the cell 3 in which the open-loop power control set list parameters are not configured is not considered, the terminal device does not expect the second numbers of bits corresponding to the cell 1 and the cell 2 to be different; or the terminal device does not expect the configuration parameters related to the open-loop power control corresponding to the cell 1 and the cell 2 to be different. For example, the cell 1 and the cell 2 simultaneously satisfy at least one of the following: the open-loop power control set list parameters are configured, the SRS resource indicator corresponding to a cell is present in the first DCI, the SRS resource indicator corresponding to the cell is not present in the first DCI, and values of the *olpc-ParameterSetDCI-0-X* corresponding to cell 1 and cell 2 are the same.

In this way, the first number of bits is the same regardless of which cell is considered, and the terminal device may determine the first number of bits based on any cell in the set of cells.

- A case where the first information indicator includes a priority indicator

For example, taking the set of cells including three cells: cell 1, cell 2, and cell 3 as an example, the terminal does not expect priority configuration parameters corresponding to cell 1, cell 2, and cell 3 to be different, for example, the *priorityIndicatorDCI-0-X* is configured or not configured for cell 1, cell 2, and cell 3, or the *priorityIndicatorDCI-1-X* is configured or not configured for cell 1, cell 2, and cell 3. If cell 1, cell 2, and cell 3 are all configured with *priorityIndicatorDCI-0-X,* and if the first DCI is DCI format 0_X, all PUSCHs scheduled by the first DCI have the same priority, which is a value indicated by the priority indicator in DCI format 0_X, and the first number of bits is 1 bit. If all of cell 1, cell 2, and cell 3 are not configured with *priorityIndicatorDCI-0-X,* the first number of bits is 0 bit.

In summary, in the method provided by the present disclosure, the terminal device receives a first DCI for scheduling N data channels, and the first DCI includes a first information indicator, so that the terminal device can determine the first number of bits for the first information indicator. Furthermore, multiple manners to determine the first number of bits are provided, which improves flexibility and effectiveness for the use of the first information indicator. For example, when the first number of bits is determined based on the maximum value, the indication of transmission information is very flexible. When the first number of bits is determined based on the minimum value, the DCI overhead is smaller. When the first number of bits is determined based on the scheduling limitation that the terminal does not expect, the problem of indication or interpretation caused by different transmission configuration parameters corresponding to different cells in the set of cells/cell combination is avoided, and the complexity of interpretation of the first DCI is reduced.

FIG. 5 illustrates a schematic flowchart of a method for indicating downlink control information provided by exemplary embodiments of the present disclosure. The method is illustrated schematically by taking as an example the execution by the terminal device 120 illustrated in FIG. 1. The method includes at least some of the following operations.

At operation 510, a first DCI is received, where the first DCI is used for scheduling N data channels, and the first DCI includes a first information indicator.

The first information indicator is used to indicate transmission information of at least one of the N data channels scheduled, or, the first information indicator is used to indicate transmission information of a data channel of at least one cell in N cells in a scheduled cell combination; N cells corresponding to N data channels belong to the cell combination, and N is a positive integer.

The data channel is PDSCH or PUSCH, N PDSCHs or N PUSCHs correspond to N cells, N cells belong to a cell combination, the cell combination belongs to a set of cells, the set of cells includes M cells, M is greater than or equal to N, and M is a positive integer.

At operation 530, transmission information indicated by the first information indicator for data channels of N cells respectively is determined.

The terminal device determines the transmission information indicated by the first information indicator for the data channel of at least one cell respectively based on at least one of the following:

- a second number of bits corresponding to each cell in the cell combination;
- a transmission configuration parameter corresponding to the cell in the cell combination, the transmission configuration parameter being used to configure information related to the transmission information; or
- a first number of bits for the first information indicator.

The second number of bits is determined according to at least one of: a determination manner of a number of bits for an information field corresponding to the first information indicator in the second DCI, or a transmission configuration parameter corresponding to each cell in the set of cells, and the second DCI is used to schedule one data channel.

The related contents of the manner of determining the second number of bits may refer to the contents of operation 430, and will not be repeatedly described here.

It is assumed that the second number of bits corresponding to the first cell is X, and the first number of bits for the first information indicator is Y. The first cell is any cell in the cell combination or a cell corresponding to one of the N data channels scheduled by the first DCI.

If Y is greater than $2^X$, the transmission information indicated by the first information indicator for data channels of N cells respectively is determined as follows.

In a case that a codepoint of the first information indicator is a first codepoint, transmission information indicated for a data channel of the first cell is determined based on an interpretation manner corresponding to the first codepoint.

The first codepoint refers to first m codepoints in codepoints corresponding to the Y bits in the first information indicator.

The interpretation manner corresponding to the first codepoint includes: an interpretation manner of an information field corresponding to the first information indicator in a second DCI, the second DCI is used for scheduling one data channel.

Optionally, the interpretation manner corresponding to the first codepoint is as follows.

- A case where the first information indicator includes a BWP indicator

When the number of BWPs $n_{BWP,RRC}$ (excluding the initial BWP) configured by the RRC signaling in the first cell is less than or equal to 3, the second number of bits corresponding to the first cell is $\lceil \log_2(n_{BWP}) \rceil$, where $n_{BWP}$ = $n_{BWP,RRC}$ + 1. The mapping relationship between the BWP indicators and the BWP identities is referenced in Table 2.

When the number of BWPs $n_{BWP,RRC}$ (excluding the initial BWP) configured by the RRC signaling in the first cell is greater than 3 (i.e., 4), the second number of bits corresponding to the first cell is $\lceil \log_2(n_{BWP}) \rceil$, where $n_{BWP}$ = $n_{BWP,RRC}$. The mapping relationship between the BWP indicators and the BWP identities is referenced in Table 3.

- A case where the first information indicator includes an open-loop power control parameter set indication

A case where there is no SRI in the first DCI

If a first parameter is configured, and the first parameter is used to configure the open-loop power control parameter set indication, for example, the first parameter is *p0-PUSCH-Set,* the first information indicator included in the first DCI is the open-loop power control parameter set indication.

i) When the first information field is "0" or "00", the terminal device determines the P0 value according to the following value: a first *P0-PUSCH-AlphaSet* in *p0-AlphaSets.*
ii) When the first information field is "1" or "01", the terminal device determines the P0 value according to the following value: a first value in *PO-PUSCH-Set* with the lowest *p0-PUSCH-SetID* value.

iii) When the first information field is "10", the terminal device determines the P0 value according to the following value: a second value in *PO-PUSCH-Set* with the lowest *p0-PUSCH-SetID* value.

If the first parameter is not configured, the terminal device determines the P0 value according to the following value: a first *P0-PUSCH-AlphaSet* in *p0-AlphaSets*.

A case where there is SRI in the first DCI

i) When the first information field is "1", the terminal device determines the P0 value according to the following value: a first value in *PO-PUSCH-Set* with a *p0-PUSCH-SetId* value mapped to the SRI field value.

ii) Otherwise, the terminal device determines the P0 value according to the following value: *p0-PUSCH-AlphaSetId* value that is mapped to the SRI field value.

- A case where the first information indicator includes a priority indicator

If the third parameter is configured, and the priority indicator is 1 bit, and the third parameter is used to configure the priority indicator, for example, the third parameter is at least one of *priorityIndicatorDCI-0-X* and *priorityIndicatorDCI-1-X*. For details, please refer to the related art [5, TS 38.213].

Optionally, the interpretation manner of the first $2^X$ codepoints in codepoints corresponding to the Y bits is the same as the interpretation manner of the $2^X$ codepoints corresponding to the X bits of the information field corresponding to the first information indicator in the legacy DCI format corresponding to the first cell. The information field corresponding to the first information indicator is an information indicator in a DCI when the DCI separately schedules the data channel of each cell.

In the legacy DCI format, the information field corresponding to the first information indicator may be the information field in the DCI when the DCI separately schedules the data channel of each cell.

In a case that a codepoint of the first information indicator is a second codepoint, the first information indicator is ignored.

In a case that a codepoint of the first information indicator is a second codepoint, transmission information indicated for a data channel of the first cell is determined based on an interpretation manner of a codepoint after modulo operation, and the codepoint after modulo operation is a modulo result of the second codepoint based on $2^X$.

The second codepoint refers to a codepoint in codepoints corresponding to the Y bits other than a first codepoint, and the first codepoint refers to first m codepoints in codepoints corresponding to the Y bits in the first information indicator.

That is, the interpretation manner of codepoints in codepoints corresponding to the Y bit other than the first $2^X$ codepoints includes the following two manners.

Manner 1: the first information indicator is ignored.

Manner 2: an interpretation manner of a M-th codepoint is the same as an interpretation manner of a M-th mod $2^X$ codepoint. For example, an interpretation manner of $2^X+1$ codepoint is the same as an interpretation manner of a first codepoint corresponding to the X bits of the information field corresponding to the first information indicator in the legacy DCI format, and an interpretation manner of $2^X+2$ codepoint is the same as an interpretation manner of a second codepoint corresponding to the X bits of the information field corresponding to the first information indicator in the legacy DCI format, and so on.

If Y is less than or equal to $2^X$, the transmission information indicated by the first information indicator for data channels of N cells respectively is determined as follows.

An interpretation manner of codepoints corresponding to the Y bits is the same as an interpretation manner of the first $2^X$ codepoints in codepoints corresponding to the X bits of the information field corresponding to the first information indicator corresponding to the first cell in the legacy DCI format.

Next, by way of example, a manner of determining transmission information indicated by the first information indicator for data channels of N cells respectively is described.

For example, taking a set of cells including three cells: cell 1, cell 2, and cell 3 as an example, the BWP configuration of each cell is as follows (the following BWPs are all downlink BWPs or all uplink BWPs).

Cell 1: in addition to the initial BWP, the network device configures a UE specific BWP through higher layer parameters, and the corresponding BWP identity is 1, that is, BWP ID = 1. According to the manner of determining the second number of bits described above, the second number of bits corresponding to the cell 1 is calculated to be $\log_2 (1 + 1) = 1$ bit. Since the number of BWPs (excluding the initial BWP) configured by the higher layer parameter is less than 3, the mapping relationship between the BWP indicators and the BWP identities of the cell 1 is referenced in Table 2.

Cell 2: in addition to the initial BWP, the network device configures three UE specific BWPs through higher layer parameters, and the corresponding BWP identities are 1, 2, and 3, that is, BWP ID = 1/2/3. According to the manner of determining the second number of bits described above, the second number of bits corresponding to the cell 2 is calculated to be $\log_2(1 + 3) = 2$ bits. Since the number of BWPs (excluding the initial BWP) configured by the higher layer parameter is equal to 3, the mapping relationship between the BWP indicators and the BWP identities of the cell 2 is referenced in Table 2.

Cell 3: in addition to the initial BWP, the network device configures three UE specific BWPs through higher layer parameters, and the corresponding BWP identitys are 1, 2, 3 and 4, that is, BWP ID = 1/2/3/4. According to the manner of determining the second number of bits described above, the second number of bits corresponding to the cell 3 is calculated to be $\log_2 (4)$ = 2 bits. Since the number of BWPs (excluding the initial BWP) configured by the higher layer parameter is greater than 3, the mapping relationship between the BWP indicators and the BWP identities of the cell 3 is referenced in Table 3.

Assuming that the first number of bits is determined based on the maximum value of the second numbers of bits corresponding to all cells in the set of cells, the first number of bits = max {1, 2, 2} = 2 bits.

For cell 1, cell 2, and cell 3, the interpretation information of $2^2$ = 4 codepoints of the BWP indicator in the first DCI is shown in Table 4 below.

Table 4 Interpretation information of codepoints

|  | Cell 3 | Cell 2 | Cell 1-manner 1 | Cell 1-manner 2 |
|---|---|---|---|---|
| BWP indicator | BWP ID | BWP ID | BWP ID | BWP ID |
| 00 | BWP ID=1 UE-dedicated BWP 1 | BWP ID=0 Initial BWP | BWP ID=0 Initial BWP | BWP ID=0 Initial BWP |
| 01 | BWP ID=2 UE-dedicated BWP 2 | BWP ID=1 UE-dedicated BWP 1 | BWP ID=1 UE-dedicated BWP 1 | BWP ID=1 UE-dedicated BWP 1 |
| 10 | BWP ID=3 UE-dedicated BWP 3 | BWP ID=2 UE-dedicated BWP 2 | Ignore the first information indicator Do not switch active BWP | BWP ID=0 Initial BWP |
| 11 | BWP ID=4 UE-dedicated BWP 4 | BWP ID=3 UE-dedicated BWP 3 | Ignore the first information indicator Do not switch active BWP | BWP ID=1 UE-dedicated BWP 1 |

Assuming that the first number of bits is determined based on the minimum value of the second numbers of bits corresponding to all cells in the set of cells, the first number of bits = max {1, 2, 2} = 1 bit.

For cell 1, cell 2, and cell 3, the interpretation information of $2^1$ = 2 codepoints of the BWP indicator in the first DCI is shown in Table 5 below.

Table 5 Interpretation information of codepoints

|  | Cell 3 | Cell 2 | Cell 1 |
|---|---|---|---|
| BWPindicator | BWP ID | BWP ID | BWP ID |
| 00 | BWP ID=1 UE-dedicated BWP 1 | BWP ID=0 Initial BWP | BWP ID=0 Initial BWP |
| 01 | BWP ID=2 UE-dedicated BWP 2 | BWP ID=1 UE-dedicated BWP 1 | BWP ID=1 UE-dedicated BWP 1 |

For example, taking the set of cells including three cells: cell 1, cell 2, and cell 3 as an example, assuming that an SRS resource indicator corresponding to cell 1, cell 2, and cell 3 is not present in the first DCI. The configuration of open-loop power control parameters of each cell is as follows.

Cell 1: Configured with open-loop power control set list parameters, such as *p0-PUSCH-SetList;* and the corresponding *olpc-ParameterSetDCI-0-X* is 1. According to the manner of determining the second number of bits described above, since the value of *olpc-ParameterSetDCI-0-X* is 1, the second number of bits corresponding to cell 1 is 1 bit.

Cell 2: Configured with open-loop power control set list parameters, such as *p0-PUSCH-SetList;* and the corresponding *olpc-ParameterSetDCI-0-X* is 2. According to the manner of determining the second number of bits described above, since the value of *olpc-ParameterSetDCI-0-X* is 2, the second number of bits corresponding to cell 2 is 2 bits.

Cell 3: The open-loop power control set list parameter is not configured. According to the manner of determining the second number of bits described above, the second number of bits corresponding to cell 3 is 0 bit.

If the first number of bits for the open-loop power control parameter set indication in the first DCI is determined according to the maximum value of the second numbers of bits corresponding to the cell 1, the cell 2, and the cell 3, or according to the maximum value of the corresponding *olpc-ParameterSetDCI-0-X,* the first number of bits is 2 bits. For cell 1, cell 2, and cell 3, the interpretation information of $2^2 = 4$ codepoints in the open-loop power control parameter set indication in the first DCI is shown in Table 6 below.

Table 6 Interpretation information of codepoints

| open-loop power control parameter set indicator | Cell 1-manner 1 | Cell 1-manner 2 | Cell 2 | Cell 3 |
|---|---|---|---|---|
| | P0 | P0 | P0 | P0 |
| 00 | a first *P0-PUSCH-Alpha-Set* in *p0-AlphaSets* | a first *P0-PUSCH-AlphaSet* in *p0-AlphaSets* | a first *P0-PUSCH-AlphaSet* in *p0-AlphaSets* | Ignore the first information indicator (a first *P0-PUSCH-AlphaSet* in *p0-AlphaSets*) |
| 01 | a first value in *P0-PUSCH-Set* with the lowest *p0-PUSCH-SetID* value | a first value in *P0-PUSCH-Set* with the lowest *P0-PUSCH-SetID* value | a first value in *P0-PUSCH-Set* with the lowest *p0-PUSCH-SetID* value | Ignore the first information indicator (a first *P0-PUSCH-AlphaSet* in p0-*AlphaSets*) |
| 10 | Ignore the first information indicator (a first *P0-PUSCH-AlphaSet* in *p0-AlphaSets*) | a first *P0-PUSCH-AlphaSet* in *p0-AlphaSets* | a second value in *P0-PUSCH-Set* with the lowest *p0-PUSCH-SetID* value | Ignore the first information indicator (a first *P0-PUSCH-AlphaSet* in *p0-AlphaSets*) |
| 11 | Reserved or Ignore the first information indicator (a first *P0-PUSCH-AlphaSet* in *p0-AlphaSets*) | a first value in *P0-PUSCH-Set* with the lowest *p0-PUSCH-SetID* value | Reserved (a first *P0-PUSCH-AlphaSet* in *p0-AlphaSets*) | Ignore the first information indicator (a first *P0-PUSCH-AlphaSet* in *p0-AlphaSets*) |

If the first number of bits for the open-loop power control parameter set indication in the first DCI is determined according to the minimum value of the second numbers of bits corresponding to the cell 1 and the cell 2, or according to the minimum value of the corresponding *olpc-ParameterSetDCI-0-X,* the first number of bits is 1 bits. For cell 1, cell 2, and cell 3, the interpretation information of $2^1 = 2$ codepoints in the open-loop power control parameter set indication in the first DCI is shown in Table 7 below.

Table 7 Interpretation information of codepoints

| open-loop power control parameter set indicator | Cell 1 | Cell 2 | Cell 3 |
|---|---|---|---|
| | P0 | P0 | P0 |
| 00 | a first *P0-PUSCH-AlphaSet* in *p0-AlphaSets* | a first *P0-PUSCH-AlphaSet* in *p0-AlphaSets* | Ignore the first information indicator (a first *P0-PUSCH-AlphaSet* in *p0-AlphaSets*) |
| 01 | a first value in *P0-PUSCH-Set* with the lowest *p0-PUSCH-SetID* value | a first value in *P0-PUSCH-Set* with the lowest *p0-PUSCH-SetID* value | Ignore the first information indicator (a first *P0-PUSCH-AlphaSet* in *p0-AlphaSets*) |

In summary, in the method provided by the present disclosure, the terminal device receives a first DCI for scheduling N data channels, and the first DCI includes a first information indicator, so that the terminal device can acquire transmission information respectively indicated for the data channel of at least one cell in the scheduled cell combination.

The terminal device is supported to interpret the first information indicator based on the transmission configuration parameter, the first number of bits, or the second number of bits, thereby improving the flexibility of interpreting. In addition, considering different determination manners of the first number of bits, a corresponding transmission information determination manner is provided, which provides a practical solution for interpretation of the first information indicator, and improves the flexibility and effectiveness of the use of the first information indicator.

FIG. 6 illustrates a schematic flowchart of a method for indicating downlink control information provided by exemplary embodiments of the present disclosure. The method is illustrated schematically by taking as an example the execution by the network device 110 illustrated in FIG. 1. The method includes at least some of the following operations.

At operation 620, a transmission configuration parameter corresponding to the cell combination is transmitted.

The network device transmits a transmission configuration parameter corresponding to at least one cell in the cell combination in advance; or, a transmission configuration parameter corresponding to each cell in the cell combination.

The transmission configuration parameter is used to configure information related to the transmission information. For the same type of transmission information, the transmission configuration parameters of each cell may be the same or different.

In order to facilitate subsequent DCI scheduling, the transmission configuration parameter corresponding to at least one cell in the cell combination includes: pieces of transmission information corresponding to at least two sets of configurations.

Transmission information corresponding to at least one cell belonging to a same set of configurations corresponds to a same codepoint, the codepoint is a codepoint of the first information indicator, and the first DCI is used to schedule the transmission information that corresponds to the at least one cell belonging to the same set of configurations.

At operation 640, a first DCI is determined.

Determining the first DCI may be understood as generating the first DCI or configuring the first DCI.

A codepoint of the first information indicator in the first DCI is determined based on transmission information indicated respectively for a data channel of the at least one cell in the scheduled cell combination. Transmission information indicated by the first DCI for the data channel of at least one cell respectively belongs to the same set of configurations and corresponds to the same codepoint.

A first number of bits for the first information indicator in the first DCI is determined based on at least one of:

- a second number of bits corresponding to each cell in a set of cells;
- a transmission configuration parameter corresponding to the cell in the set of cells, the transmission configuration parameter being used to configure information related to the transmission information;
- a number of elements included in the transmission configuration parameter corresponding to the cell in the set of cells; or
- a bit configuration parameter, the bit configuration parameter being used to indicate the first number of bits for the first information indicator.

Optionally, the first number of bits for the first information indicator in the first DCI is determined based on at least one of:

- at least one second number of bits corresponding to at least one cell in the set of cells, the at least one second number of bits corresponding to the at least one cell in the set of cells being greater than 0;
- at least one transmission configuration parameter corresponding to the at least one cell in the set of cells, the at least one cell in the set of cells being configured with the at least one transmission configuration parameter;
- at least one number of elements included in the at least one transmission configuration parameter corresponding to the at least one cell in the set of cells, the at least one number of elements included in the at least one transmission configuration parameter corresponding to the at least one cell in the set of cells being greater than 0; or
- a bit configuration parameter, the bit configuration parameter being used to indicate the first number of bits for the first information indicator.

Optionally, the first number of bits for the first information indicator in the first DCI is determined based on at least one of:

- a second number of bits corresponding to each cell in the cell combination;
- a transmission configuration parameter corresponding to the cell in the cell combination, the transmission configuration parameter being used to configure information related to the transmission information;
- a number of elements included in the transmission configuration parameter corresponding to the cell in the cell combination; or
- a bit configuration parameter, the bit configuration parameter being used to indicate the first number of bits for the first information indicator.

Optionally, the first number of bits for the first information indicator in the first DCI is determined based on at least one of:

- at least one second number of bits corresponding to at least one cell in the cell combination, the at least one second number of bits corresponding to the at least one cell in the cell combination being greater than 0;
- at least one transmission configuration parameter corresponding to the at least one cell in the cell combination, the at least one cell in the cell combination being configured with the at least one transmission configuration parameter;
- at least one number of elements included in the at least one transmission configuration parameter corresponding to the at least one cell in the cell combination, the at least one number of elements included in the at least one transmission configuration parameter corresponding to the at least one cell in the cell combination being greater than 0; or
- a bit configuration parameter, the bit configuration parameter being used to indicate the first number of bits for the first information indicator.

The cell combination belongs to the set of cells, and the second number of bits is determined according to at least one of: a determination manner of a number of bits for an information field corresponding to a data channel of each cell in the at least one cell under separate scheduling, or a transmission configuration parameter corresponding to each cell in the set of cells.

The first number of bits for the first information indicator in the first DCI is at least one of:

- a maximum value in the second numbers of bits corresponding to respective cells in the set of cells;
- a minimum value in the second numbers of bits corresponding to respective cells in the set of cells;
- an average value of the second numbers of bits corresponding to respective cells in the set of cells;
- a median value of the second numbers of bits corresponding to respective cells in the set of cells;
- a maximum value in the transmission configuration parameters corresponding to respective cells in the set of cells;
- a minimum value in the transmission configuration parameters corresponding to respective cells in the set of cells;
- an average value of the transmission configuration parameters corresponding to respective cells in the set of cells;
- a median value of the transmission configuration parameters corresponding to respective cells in the set of cells;
- a maximum value in numbers of elements included in the transmission configuration parameters corresponding to the respective cells in the set of cells;
- a minimum value in the numbers of elements included in the transmission configuration parameters corresponding to the respective cells in the set of cells;
- an average value of the numbers of elements included in the transmission configuration parameters corresponding to the respective cells in the set of cells; or
- a median value of the numbers of elements included in the transmission configuration parameters corresponding to the respective cells in the set of cells.

Optionally, the first number of bits is at least one of:

- a maximum value in at least one second number of bits corresponding to the at least one cell in the set of cells, the at least one second number of bits corresponding to the at least one cell in the set of cells being greater than 0;
- a minimum value in at least one second number of bits corresponding to the at least one cell in the set of cells, the at least one second number of bits corresponding to the at least one cell in the set of cells being greater than 0;
- an average value of at least one second number of bits corresponding to the at least one cell in the set of cells, the at least one second number of bits corresponding to the at least one cell in the set of cells being greater than 0;
- a median value of at least one second number of bits corresponding to the at least one cell in the set of cells, the at least one second number of bits corresponding to the at least one cell in the set of cells being greater than 0;
- a maximum value in at least one transmission configuration parameter corresponding to the at least one cell in the set of cells, the at least one cell in the set of cells being configured with the at least one transmission configuration parameter;
- a minimum value in at least one transmission configuration parameter corresponding to the at least one cell in the set of cells, the at least one cell in the set of cells being configured with the at least one transmission configuration parameter;
- an average value of at least one transmission configuration parameter corresponding to the at least one cell in the set of cells, the at least one cell in the set of cells being configured with the at least one transmission configuration parameter;

- a median value of at least one transmission configuration parameter corresponding to the at least one cell in the set of cells, the at least one cell in the set of cells being configured with the at least one transmission configuration parameter;

a maximum value in at least one number of elements included in the at least one transmission configuration parameter corresponding to the at least one cell in the set of cells, the at least one number of elements included in the at least one transmission configuration parameter corresponding to the at least one cell in the set of cells being greater than 0;

a minimum value in at least one number of elements included in the at least one transmission configuration parameter corresponding to the at least one cell in the set of cells, the at least one number of elements included in the at least one transmission configuration parameter corresponding to the at least one cell in the set of cells being greater than 0;

an average value of at least one number of elements included in the at least one transmission configuration parameter corresponding to the at least one cell in the set of cells, the at least one number of elements included in the at least one transmission configuration parameter corresponding to the at least one cell in the set of cells being greater than 0; or

a median value of at least one number of elements included in the at least one transmission configuration parameter corresponding to the at least one cell in the set of cells, the at least one number of elements included in the at least one transmission configuration parameter corresponding to the at least one cell in the set of cells being greater than 0.

Optionally, the first number of bits is at least one of:

- a maximum value in the second numbers of bits corresponding to respective cells in the cell combination;
- a minimum value in the second numbers of bits corresponding to respective cells in the cell combination;
- an average value of the second numbers of bits corresponding to respective cells in the cell combination;
- a median value of the second numbers of bits corresponding to respective cells in the cell combination;
- a maximum value in the transmission configuration parameters corresponding to respective cells in the cell combination;
- a minimum value in the transmission configuration parameters corresponding to respective cells in the cell combination;
- an average value of the transmission configuration parameters corresponding to respective cells in the cell combination;
- a median value of the transmission configuration parameters corresponding to respective cells in the cell combination;
- a maximum value in numbers of elements included in the transmission configuration parameters corresponding to the respective cells in the cell combination;
- a minimum value in the numbers of elements included in the transmission configuration parameters corresponding to the respective cells in the cell combination;
- an average value of the numbers of elements included in the transmission configuration parameters corresponding to the respective cells in the cell combination; or
- a median value of the numbers of elements included in the transmission configuration parameters corresponding to the respective cells in the cell combination.

Optionally, the first number of bits is at least one of:

- a maximum value in at least one second number of bits corresponding to the at least one cell in the cell combination, the at least one second number of bits corresponding to the at least one cell in the cell combination being greater than 0;
- a minimum value in at least one second number of bits corresponding to the at least one cell in the cell combination, the at least one second number of bits corresponding to the at least one cell in the cell combination being greater than 0;
- an average value of at least one second number of bits corresponding to the at least one cell in the cell combination, the at least one second number of bits corresponding to the at least one cell in the cell combination being greater than 0;
- a median value of at least one second number of bits corresponding to the at least one cell in the cell combination, the at least one second number of bits corresponding to the at least one cell in the cell combination being greater than 0;
- a maximum value in at least one transmission configuration parameter corresponding to the at least one cell in the cell combination, the at least one cell in the cell combination being configured with the at least one transmission configuration parameter;
- a minimum value in at least one transmission configuration parameter corresponding to the at least one cell in the cell combination, the at least one cell in the cell combination being configured with the at least one transmission configuration parameter;

- an average value of at least one transmission configuration parameter corresponding to the at least one cell in the cell combination, the at least one cell in the cell combination being configured with the at least one transmission configuration parameter;
- a median value of at least one transmission configuration parameter corresponding to the at least one cell in the cell combination, the at least one cell in the cell combination being configured with the at least one transmission configuration parameter;
- a maximum value in at least one number of elements included in the at least one transmission configuration parameter corresponding to the at least one cell in the cell combination, the at least one number of elements included in the at least one transmission configuration parameter corresponding to the at least one cell in the cell combination being greater than 0;
- a minimum value in at least one number of elements included in the at least one transmission configuration parameter corresponding to the at least one cell in the cell combination, the at least one number of elements included in the at least one transmission configuration parameter corresponding to the at least one cell in the cell combination being greater than 0;
- an average value of at least one number of elements included in the at least one transmission configuration parameter corresponding to the at least one cell in the cell combination, the at least one number of elements included in the at least one transmission configuration parameter corresponding to the at least one cell in the cell combination being greater than 0; or
- a median value of at least one number of elements included in the at least one transmission configuration parameter corresponding to the at least one cell in the cell combination, the at least one number of elements included in the at least one transmission configuration parameter corresponding to the at least one cell in the cell combination being greater than 0.

In some embodiments, the network device generates the first DCI based on at least one of the following not expected by a terminal device:

- second numbers of bits corresponding to respective cells in the set of cells are different;
- transmission configuration parameters corresponding to the respective cells in the set of cells are different; or
- numbers of elements included in the transmission configuration parameters corresponding to the respective cells in the set of cells are different.

Optionally, the network device generates the first DCI based on at least one of the following not expected by a terminal device:

- at least one second number of bits corresponding to at least one cell in the set of cells is different from each other, the at least one second number of bits corresponding to the at least one cell in the set of cells being greater than 0;
- at least one transmission configuration parameter corresponding to the at least one cell in the set of cells is different from each other, the at least one cell in the set of cells being configured with the at least one transmission configuration parameter; or
- at least one number of elements included in the at least one transmission configuration parameter corresponding to the at least one cell in the set of cells is different from each other, the at least one number of elements included in the at least one transmission configuration parameter corresponding to the at least one cell in the set of cells being greater than 0.

Optionally, the network device generates the first DCI based on at least one of the following not expected by a terminal device:

- second numbers of bits corresponding to respective cells in the cell combination are different;
- transmission configuration parameters corresponding to the respective cells in the cell combination are different; or
- numbers of elements included in the transmission configuration parameters corresponding to the respective cells in the cell combination are different.

Optionally, the network device generates the first DCI based on at least one of the following not expected by a terminal device:

- at least one second number of bits corresponding to at least one cell in the cell combination is different from each other, the at least one second number of bits corresponding to the at least one cell in the cell combination being greater than 0;

- at least one transmission configuration parameter corresponding to the at least one cell in the cell combination is different from each other, the at least one cell in the cell combination being configured with the at least one transmission configuration parameter; or
- at least one number of elements included in the at least one transmission configuration parameter corresponding to the at least one cell in the cell combination is different from each other, the at least one number of elements included in the at least one transmission configuration parameter corresponding to the at least one cell in the cell combination being greater than 0.

At operation 660, a first DCI is transmitted.

The first DCI is used for scheduling N data channels, and the first DCI includes a first information indicator.

The first information indicator is used to indicate transmission information respectively for a data channel of at least one cell in a scheduled cell combination. The scheduled cell combination is a combination of N cells, and the N data channels correspond to the N cells, N being a positive integer. That is, N is equal to 1 and/or N is greater than 1.

The data channel is PDSCH or PUSCH, N PDSCHs or N PUSCHs correspond to N cells, N cells belong to a cell combination, and the cell combination belongs to a set of cells.

In some embodiments, the first information indicator indicates the transmission information for the data channel of the at least one cell respectively.

In some embodiments, the network device receives data on at least one of the N data channels.

In the present disclosure, the data channel may also be understood as data transmitted on the data channel. After the network device schedules N data channels through the first DCI, the terminal device transmits data on at least one of the N data channels based on the scheduling of the first DCI, and the network device receives data transmitted by the terminal device on at least one of the N data channels.

In some embodiments, the network device transmits data on at least one of the N data channels.

After scheduling N data channels through the first DCI, the network device transmits data on at least one of the N data channels, and the network device transmits data to the terminal device on at least one of the N data channels.

In summary, in the method provided by the present disclosure, the network device transmits a first DCI for scheduling N data channels, and the first DCI includes a first information indicator, so that the terminal device can acquire transmission information respectively indicated for the data channel of at least one cell in the scheduled cell combination.

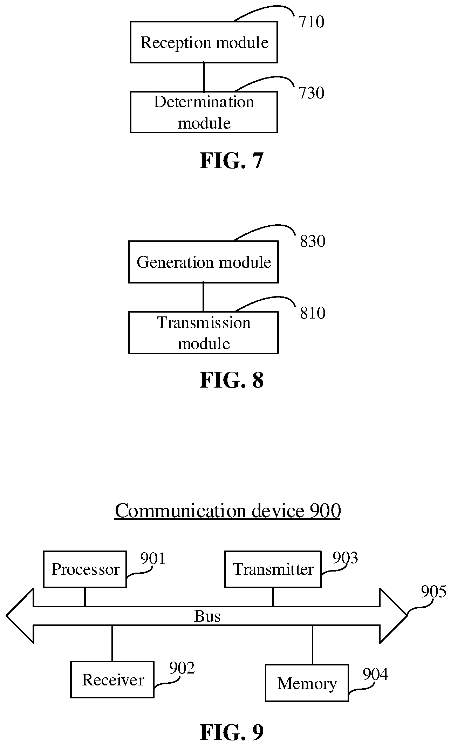

FIG. 7 illustrates a structural block diagram of an apparatus for indicating downlink control information provided by exemplary embodiments of the present disclosure. The apparatus includes at least some of the following reception module 710 and determination module 730.

The reception module 710 is configured to receive first downlink control information (DCI), where the first DCI is used to schedule N data channels, and the first DCI includes a first information indicator, the first information indicator being used to indicate transmission information respectively for a data channel of at least one cell in a scheduled cell combination.

The scheduled cell combination is a combination of N cells, and the N data channels correspond to the N cells, N being a positive integer.

In some embodiments, the apparatus further includes a determination module 730, the determination module 730 is configured to determine the transmission information indicated by the first information indicator for the data channel of the at least one cell respectively based on at least one of:

a second number of bits corresponding to each cell in the cell combination;
[a transmission configuration parameter corresponding to the cell in the cell combination, the transmission configuration parameter being used to configure information related to the transmission information; or
[a first number of bits for the first information indicator.

The second number of bits is determined according to at least one of: a determination manner of a number of bits for an information field corresponding to a data channel of each cell in the at least one cell under separate scheduling, or a transmission configuration parameter corresponding to each cell in the cell combination.

The number of bits for the information field is a number of bits for an information field corresponding to the first information indicator.

In some embodiments, in a case that a second number of bits corresponding to a first cell is zero, the first information indicator does not indicate transmission information for a data channel of the first cell; and/or in a case that the second number of bits corresponding to the first cell is greater than zero, the first information indicator indicates the transmission information for the data channel of the first cell.

The first cell is any cell in the cell combination.

In some embodiments, a second number of bits corresponding to a first cell is X, the first cell is any cell in the cell combination, and the first number of bits is Y bits.

The determination module 730 is further configured to: in a case that a codepoint of the first information indicator is a first codepoint, determine transmission information indicated by the first information indicator for a data channel of the first cell based on an interpretation manner corresponding to the first codepoint.

The first codepoint refers to the first $2^X$ codepoints in codepoints corresponding to the Y bits.

In some embodiments, the interpretation manner corresponding to the first codepoint includes an interpretation manner of an information field corresponding to a data channel of each cell in the at least one cell under separate scheduling.

In some embodiments, a second number of bits corresponding to a first cell is X, the first cell is any cell in the cell combination, and the first number of bits is Y bits.

The determination module 730 is further configured to: in a case that a codepoint of the first information indicator is a second codepoint, ignore the first information indicator.

The second codepoint refers to a codepoint in codepoints corresponding to the Y bits other than a first codepoint, and the first codepoint refers to the first $2^X$ codepoints in codepoints corresponding to the Y bits in the first information indicator.

In some embodiments, a second number of bits corresponding to a first cell is X, the first cell is any cell in the cell combination, and the first number of bits is Y bits.

The determination module 730 is further configured to: in a case that a codepoint of the first information indicator is a second codepoint, determine transmission information indicated by the first information indicator for a data channel of the first cell based on an interpretation manner of a codepoint after modulo operation, and the codepoint after modulo operation is a modulo result of the second codepoint based on $2^X$.

The second codepoint refers to a codepoint in codepoints corresponding to the Y bits other than a first codepoint, and the first codepoint refers to the first $2^X$ codepoints in codepoints corresponding to the Y bits in the first information indicator.

In some embodiments, the interpretation manner corresponding to the codepoint after modulo operation includes an interpretation manner of an information field corresponding to a data channel of the first cell under separate scheduling.

In some embodiments, Y is greater than $2^X$.

In some embodiments, a second number of bits corresponding to a first cell is X, the first cell is any cell in the cell combination, and the first number of bits is Y bits.

The determination module 730 is further configured to determine transmission information indicated by the first information indicator for a data channel of the first cell based on an interpretation manner of a third codepoint.

The third codepoint is a codepoint corresponding to the Y bits.

In some embodiments, the interpretation manner corresponding to the third codepoint includes an interpretation manner of an information field corresponding to a data channel of each cell in the at least one cell under separate scheduling.

In some embodiments, Y is less than or equal to $2^X$.

In some embodiments, a transmission configuration parameter corresponding to the at least one cell in the cell combination includes: pieces of transmission information corresponding to at least two sets of configurations.

Transmission information corresponding to at least one cell belonging to a same set of configurations corresponds to a same codepoint, the codepoint is a codepoint of the first information indicator, and the first DCI is used to schedule the transmission information that corresponds to the at least one cell belonging to the same set of configurations.

In some embodiments, the determination module 730 is further configured to determine a first number of bits for the first information indicator based on at least one of:

a second number of bits corresponding to each cell in a set of cells;
a transmission configuration parameter corresponding to the cell in the set of cells, the transmission configuration parameter being used to configure information related to the transmission information;
a number of elements included in the transmission configuration parameter corresponding to the cell in the set of cells;
or
a bit configuration parameter, the bit configuration parameter being used to indicate the first number of bits for the first information indicator.

The cell combination belongs to the set of cells, and the second number of bits is determined according to at least one of: a determination manner of a number of bits for an information field corresponding to a data channel of each cell in the at least one cell under separate scheduling, or a transmission configuration parameter corresponding to each cell in the set of cells.

In some embodiments, the first number of bits is at least one of:

a maximum value in second numbers of bits corresponding to respective cells in the set of cells;
a minimum value in the second numbers of bits corresponding to the respective cells in the set of cells;
a maximum value in transmission configuration parameters corresponding to the respective cells in the set of cells;
a minimum value in the transmission configuration parameters corresponding to the respective cells in the set of cells;
a maximum value in numbers of elements included in the transmission configuration parameters corresponding to the respective cells in the set of cells; or
a minimum value in the numbers of elements included in the transmission configuration parameters corresponding to the respective cells in the set of cells.

In some embodiments, the terminal device does not expect at least one of the following:

second numbers of bits corresponding to respective cells in the set of cells are different;
transmission configuration parameters corresponding to the respective cells in the set of cells are different; or
numbers of elements included in the transmission configuration parameters corresponding to the respective cells in the set of cells are different.

In some embodiments, the determination module 730 is further configured to determine the first number of bits based on at least one of:

at least one second number of bits corresponding to at least one cell in the set of cells, the at least one second number of bits corresponding to the at least one cell in the set of cells being greater than 0;
at least one transmission configuration parameter corresponding to the at least one cell in the set of cells, the at least one cell in the set of cells being configured with the at least one transmission configuration parameter;
at least one number of elements included in the at least one transmission configuration parameter corresponding to the at least one cell in the set of cells, the at least one number of elements included in the at least one transmission configuration parameter corresponding to the at least one cell in the set of cells being greater than 0; or
[a bit configuration parameter, the bit configuration parameter being used to indicate the first number of bits for the first information indicator.

The cell combination belongs to the set of cells, and the second number of bits is determined according to at least one of: a determination manner of a number of bits for an information field corresponding to a data channel of each cell in the at least one cell under separate scheduling, or a transmission configuration parameter corresponding to each cell in the set of cells.
In some embodiments, the first number of bits is at least one of:

a maximum value in the at least one second number of bits corresponding to the at least one cell in the set of cells, the at least one second number of bits corresponding to the at least one cell in the set of cells being greater than 0;
[a minimum value in the at least one second number of bits corresponding to the at least one cell in the set of cells, the at least one second number of bits corresponding to the at least one cell in the set of cells being greater than 0;
a maximum value in the at least one transmission configuration parameter corresponding to the at least one cell in the set of cells, the at least one cell in the set of cells being configured with the at least one transmission configuration parameter;
a minimum value in the at least one transmission configuration parameter corresponding to the at least one cell in the set of cells, the at least one cell in the set of cells being configured with the at least one transmission configuration parameter;
a maximum value in the at least one number of elements included in the at least one transmission configuration parameter corresponding to the at least one cell in the set of cells, the at least one number of elements included in the at least one transmission configuration parameter corresponding to the at least one cell in the set of cells being greater than 0; or
a minimum value in the at least one number of elements included in the at least one transmission configuration parameter corresponding to the at least one cell in the set of cells, the at least one number of elements included in the at least one transmission configuration parameter corresponding to the at least one cell in the set of cells being greater than 0.

In some embodiments, the terminal device does not expect at least one of the following:

at least one second number of bits corresponding to at least one cell in a set of cells is different from each other, the at least one second number of bits corresponding to the at least one cell in the set of cells being greater than 0;

at least one transmission configuration parameter corresponding to the at least one cell in the set of cells is different from each other, the at least one cell in the set of cells being configured with the at least one transmission configuration parameter; or

at least one number of elements included in the at least one transmission configuration parameter corresponding to the at least one cell in the set of cells is different from each other, the at least one number of elements included in the at least one transmission configuration parameter corresponding to the at least one cell in the set of cells being greater than 0.

In some embodiments, the determination module 730 is further configured to determine the first number of bits based on at least one of:

a second number of bits corresponding to each cell in the cell combination;
a transmission configuration parameter corresponding to the cell in the cell combination, the transmission configuration parameter being used to configure information related to the transmission information;
a number of elements included in the transmission configuration parameter corresponding to the cell in the cell combination; or
a bit configuration parameter, the bit configuration parameter being used to indicate the first number of bits for the first information indicator.

The second number of bits is determined according to at least one of: a determination manner of a number of bits for an information field corresponding to a data channel of each cell in the at least one cell under separate scheduling, or a transmission configuration parameter corresponding to each cell in the cell combination.

In some embodiments, the determination module 730 is further configured to determine the first number of bits based on at least one of:

at least one second number of bits corresponding to at least one cell in the cell combination, the at least one second number of bits corresponding to the at least one cell in the cell combination being greater than 0;
at least one transmission configuration parameter corresponding to the at least one cell in the cell combination, the at least one cell in the cell combination being configured with the at least one transmission configuration parameter;
at least one number of elements included in the at least one transmission configuration parameter corresponding to the at least one cell in the cell combination, the at least one number of elements included in the at least one transmission configuration parameter corresponding to the at least one cell in the cell combination being greater than 0; or
a bit configuration parameter, the bit configuration parameter being used to indicate the first number of bits for the first information indicator.

The second number of bits is determined according to at least one of: a determination manner of a number of bits for an information field corresponding to a data channel of each cell in the at least one cell under separate scheduling, or a transmission configuration parameter corresponding to each cell in the cell combination.

In some embodiments, the first information indicator includes at least one of:

a bandwidth part (BWP) indicator;
an open-loop power control parameter set indication; or
a priority indicator.

In some embodiments, the transmission configuration parameter includes at least one of:

a configuration parameter of bandwidth part (BWP);
[a parameter of an open-loop power control set list;
[whether the first DCI includes a sounding reference signal (SRS) information indicator;
[a transmission configuration parameter for configuring a number of bits for an open-loop power control parameter set indication; or
a priority configuration parameter.

In summary, the apparatus provided by the present disclosure supports to receive a first DCI for scheduling N data channels, and the first DCI includes a first information indicator, so that the terminal device can acquire transmission information respectively indicated for the data channel of at least one cell in the scheduled cell combination.

FIG. 8 illustrates a structural block diagram of an apparatus for indicating downlink control information provided by exemplary embodiments of the present disclosure. The apparatus includes at least some of the following transmission module 810 and generation module 830.

The transmission module 810 is configured to transmit first downlink control information (DCI), where the first DCI is used to schedule N data channels, and the first DCI includes a first information indicator, the first information indicator being used to indicate transmission information respectively for a data channel of at least one cell in a scheduled cell combination.

The scheduled cell combination is a combination of N cells, and the N data channels correspond to the N cells, N being a positive integer.

In some embodiments, the apparatus further includes a generation module 830, the generation module 830 is configured to generate the first DCI, where a codepoint of the first information indicator in the first DCI is determined based on transmission information indicated fora data channel of the at least one cell respectively.

In some embodiments, the transmission module 810 is further configured to transmit a transmission configuration parameter corresponding to the at least one cell in the cell combination, where the transmission configuration parameter is used to configure information related to the transmission information.

In some embodiments, a transmission configuration parameter corresponding to the at least one cell in the cell combination includes: pieces of transmission information corresponding to at least two sets of configurations.

Transmission information corresponding to at least one cell belonging to a same set of configurations corresponds to a same codepoint, the codepoint is a codepoint of the first information indicator, and the first DCI is used to schedule the transmission information that corresponds to the at least one cell belonging to the same set of configurations.

In some embodiments, the first information indicator includes at least one of:

    a bandwidth part (BWP) indicator;
    an open-loop power control parameter set indication; or
    a priority indicator.

In some embodiments, the transmission configuration parameter includes at least one of:

    a configuration parameter of bandwidth part (BWP);
    a parameter of an open-loop power control set list;
    whether the first DCI includes a sounding reference signal (SRS) information indicator;
    a transmission configuration parameter for configuring a number of bits for an open-loop power control parameter set indication; or
    [a priority configuration parameter.

In summary, the apparatus provided by the present disclosure supports to transmit a first DCI for scheduling N data channels, and the first DCI includes a first information indicator, so that the terminal device can acquire transmission information respectively indicated for the data channel of at least one cell in the scheduled cell combination.

It should be noted that the apparatus provided by the above embodiments is only illustrated by the division of the above functional modules. In practical application, the above functions may be assigned by different functional modules according to actual needs, that is, the internal structure of the device is divided into different functional modules to complete all or part of the functions described above.

With regard to the apparatus in the embodiments, the specific manner in which the respective modules perform operations has been described in detail in the embodiments relating to the method and will not be explained in detail herein.

FIG. 9 illustrates a schematic structural diagram of a communication device (a terminal device or a network device) provided by some exemplary embodiments of the present disclosure. The communication device 900 includes a processor 901, a receiver 902, a transmitter 903, a memory 904, and a bus 905.

The processor 901 includes one or more processing cores and executes various functional applications and information processing by running software programs and modules. In some embodiments, the processor 901 may be configured to implement functions and operations of the determination module 730 and/or the generation module 830 described above.

The receiver 902 and the transmitter 903 may be implemented as a communication component, which may be a communication chip. In some embodiments, the receiver 902 may be configured to implement functions and operations of the reception module 710 described above. In some embodiments, the transmitter 903 may be configured to implement functions and operations of the transmission module 810 described above.

The memory 904 is connected with the processor 901 via a bus 905. The memory 904 may be configured to store at least one instruction, and the processor 901 is configured to execute the at least one instruction to implement various operations in the above-described method embodiments.

Furthermore, the memory 904 may be implemented by any type of volatile or non-volatile storage device or a combination of them. The volatile or non-volatile storage device includes, but is not limited to, a magnetic or optical disk, an electrically Erasable Programmable Read-Only Memory (EEPROM), an Erasable Programmable Read-Only Memory (EPROM), a Static Random-Access Memory (SRAM), a Read-Only Memory (ROM), a magnetic memory, a flash memory, a programmable Read-Only Memory (PROM).

In some embodiments, the receiver 902 receives signals/data independently, or the processor 901 controls the receiver 902 to receive signals/data, or the processor 901 requests the receiver 902 to receive signals/data, or the processor 901 cooperates with the receiver 902 to receive signals/data.

In some embodiments, the transmitter 903 transmits signals/data independently, or the processor 901 controls the transmitter 903 to transmit signals/data, or the processor 901 requests the transmitter 903 to transmit signals/data, or the processor 901 cooperates with the transmitter 903 to transmit signals/data.

In an exemplary embodiment of the present disclosure, there is further provided a computer-readable storage medium, having stored therein at least one program that is loaded and executed by the processor to implement the method for indicating downlink control information provided by each of the method embodiments described above.

In an exemplary embodiment of the present disclosure, there is further provided a chip, including a programmable logic circuit and/or program instructions, when the chip is running on a communication device, the chip is configured to implement the method for indicating downlink control information provided by each of the method embodiments described above.

In an exemplary embodiment of the present disclosure, there is further provided a computer program product that, when running on a processor of a computer device, causes the computer device to execute the method for indicating downlink control information described above.

In an exemplary embodiment of the present disclosure, there is further provided a computer program, including computer instructions that, when being executed by a processor of a computer device, cause the computer device to execute the method for indicating downlink control information described above.

Those skilled in the art will appreciate that in one or more of the above examples, the functions described in embodiments of the present disclosure may be implemented in hardware, software, firmware or any combination thereof. When implemented in software, these functions may be stored in a computer-readable medium or transmitted as one or more instructions or codes on the computer-readable medium. The computer-readable medium includes a computer storage medium and a communication medium; herein the communication medium includes any medium that facilitates the transfer of a computer program from one place to another. The storage medium may be any available medium accessible to a general-purpose or special-purpose computer.

The above description is only optional embodiments of the present disclosure and is not intended to limit the present disclosure. All modifications, replacements and improvements made within the spirit and principles of the present disclosure should be included within the scope of protection of the present disclosure.

**Claims**

1. A method for indicating downlink control information, performed by a terminal device, the method comprising:

   receiving first downlink control information (DCI), wherein the first DCI is used to schedule N data channels, and the first DCI comprises a first information indicator, the first information indicator being used to indicate transmission information respectively for a data channel of at least one cell in a scheduled cell combination; wherein the scheduled cell combination is a combination of N cells, and the N data channels correspond to the N cells, N being a positive integer.

2. The method of claim 1, wherein the transmission information indicated by the first information indicator for the data channel of the at least one cell respectively is determined based on at least one of:

   a second number of bits corresponding to each cell in the cell combination;
   a transmission configuration parameter corresponding to the cell in the cell combination, the transmission configuration parameter being used to configure information related to the transmission information; or
   a first number of bits for the first information indicator;
   wherein the second number of bits is determined according to at least one of: a determination manner of a number of bits for an information field corresponding to a data channel of each cell in the at least one cell under separate scheduling, or a transmission configuration parameter corresponding to each cell in the cell combination; and
   wherein the number of bits for the information field is a number of bits for an information field corresponding to the first information indicator.

3. The method of claim 2, wherein in a case that a second number of bits corresponding to a first cell is zero, the first information indicator does not indicate transmission information for a data channel of the first cell; or in a case that the second number of bits corresponding to the first cell is greater than zero, the first information indicator indicates the transmission information for the data channel of the first cell; and
   wherein the first cell is any cell in the cell combination.

4. The method of claim 2, wherein a second number of bits corresponding to a first cell is X, the first cell is any cell in the cell combination, and the first number of bits is Y bits;

   wherein in a case that a codepoint of the first information indicator is a first codepoint, transmission information indicated by the first information indicator for a data channel of the first cell is determined based on an interpretation manner corresponding to the first codepoint; and
   wherein the first codepoint refers to first m codepoints in codepoints corresponding to the Y bits.

5. The method of claim 2, wherein a second number of bits corresponding to a first cell is X, the first cell is any cell in the cell combination, and the first number of bits is Y bits;

   wherein in a case that a codepoint of the first information indicator is a second codepoint, the first information indicator is ignored; and
   wherein the second codepoint refers to a codepoint in codepoints corresponding to the Y bits other than a first codepoint, and the first codepoint refers to first m codepoints in codepoints corresponding to the Y bits in the first information indicator.

6. The method of claim 2, wherein a second number of bits corresponding to a first cell is X, the first cell is any cell in the cell combination, and the first number of bits is Y bits;

   wherein in a case that a codepoint of the first information indicator is a second codepoint, transmission information indicated by the first information indicator for a data channel of the first cell is determined based on an interpretation manner of a codepoint after modulo operation, and the codepoint after modulo operation is a modulo result of the second codepoint based on m; and
   wherein the second codepoint refers to a codepoint in codepoints corresponding to the Y bits other than a first codepoint, and the first codepoint refers to first m codepoints in codepoints corresponding to the Y bits in the first information indicator.

7. The method of any one of claims 4 to 6, wherein Y is greater than m, and m is $2^X$.

8. The method of claim 2, wherein a second number of bits corresponding to a first cell is X, the first cell is any cell in the cell combination, and the first number of bits is Y bits;

   wherein transmission information indicated by the first information indicator for a data channel of the first cell is determined based on an interpretation manner of a third codepoint; and
   wherein the third codepoint is a codepoint corresponding to the Y bits.

9. The method of claim 8, wherein Y is less than or equal to m, and m is $2^X$.

10. The method of any one of claims 3 to 9, wherein a transmission configuration parameter corresponding to the at least one cell in the cell combination comprises: pieces of transmission information corresponding to at least two sets of configurations;
    wherein transmission information corresponding to at least one cell belonging to a same set of configurations among the at least two sets of configurations corresponds to a same codepoint, the codepoint is a codepoint of the first information indicator, the first DCI is used to schedule the transmission information that corresponds to the at least one cell belonging to the same set of configurations, and the pieces of transmission information corresponding to the at least two sets of configurations are partially different or completely different.

11. The method of claim 1 or 2, wherein a first number of bits for the first information indicator is determined based on at least one of:

    a second number of bits corresponding to each cell in a set of cells;

a transmission configuration parameter corresponding to the cell in the set of cells, the transmission configuration parameter being used to configure information related to the transmission information;
a number of elements comprised in the transmission configuration parameter corresponding to the cell in the set of cells; or
a bit configuration parameter, the bit configuration parameter being used to indicate the first number of bits;
wherein the cell combination belongs to the set of cells, and the second number of bits is determined according to at least one of: a determination manner of a number of bits for an information field corresponding to a data channel of each cell in the at least one cell under separate scheduling, or a transmission configuration parameter corresponding to each cell in the set of cells.

12. The method of claim 11, wherein the first number of bits is at least one of:

a maximum value in second numbers of bits corresponding to respective cells in the set of cells;
a minimum value in the second numbers of bits corresponding to the respective cells in the set of cells;
a maximum value in transmission configuration parameters corresponding to the respective cells in the set of cells;
a minimum value in the transmission configuration parameters corresponding to the respective cells in the set of cells;
a maximum value in numbers of elements comprised in the transmission configuration parameters corresponding to the respective cells in the set of cells; or
a minimum value in the numbers of elements comprised in the transmission configuration parameters corresponding to the respective cells in the set of cells.

13. The method of any one of claims 10 to 12, wherein the terminal device does not expect at least one of the following:

second numbers of bits corresponding to respective cells in the set of cells are different;
transmission configuration parameters corresponding to the respective cells in the set of cells are different; or
numbers of elements comprised in the transmission configuration parameters corresponding to the respective cells in the set of cells are different.

14. The method of claim 10, wherein the first number of bits is determined based on at least one of:

at least one second number of bits corresponding to at least one cell in the set of cells, the at least one second number of bits corresponding to the at least one cell in the set of cells being greater than 0;
at least one transmission configuration parameter corresponding to the at least one cell in the set of cells, the at least one cell in the set of cells being configured with the at least one transmission configuration parameter;
at least one number of elements comprised in the at least one transmission configuration parameter corresponding to the at least one cell in the set of cells, the at least one number of elements comprised in the at least one transmission configuration parameter corresponding to the at least one cell in the set of cells being greater than 0; or
a bit configuration parameter, the bit configuration parameter being used to indicate the first number of bits for the first information indicator;
wherein the cell combination belongs to the set of cells, and the second number of bits is determined according to at least one of: a determination manner of a number of bits for an information field corresponding to a data channel of each cell in the at least one cell under separate scheduling, or a transmission configuration parameter corresponding to each cell in the set of cells.

15. The method of claim 14, wherein the first number of bits is at least one of:

a maximum value in the at least one second number of bits corresponding to the at least one cell in the set of cells, the at least one second number of bits corresponding to the at least one cell in the set of cells being greater than 0;
a minimum value in the at least one second number of bits corresponding to the at least one cell in the set of cells, the at least one second number of bits corresponding to the at least one cell in the set of cells being greater than 0;
a maximum value in the at least one transmission configuration parameter corresponding to the at least one cell in the set of cells, the at least one cell in the set of cells being configured with the at least one transmission configuration parameter;
a minimum value in the at least one transmission configuration parameter corresponding to the at least one cell in the set of cells, the at least one cell in the set of cells being configured with the at least one transmission configuration parameter;

a maximum value in the at least one number of elements comprised in the at least one transmission configuration parameter corresponding to the at least one cell in the set of cells, the at least one number of elements comprised in the at least one transmission configuration parameter corresponding to the at least one cell in the set of cells being greater than 0; or

a minimum value in the at least one number of elements comprised in the at least one transmission configuration parameter corresponding to the at least one cell in the set of cells, the at least one number of elements comprised in the at least one transmission configuration parameter corresponding to the at least one cell in the set of cells being greater than 0.

16. The method of claim 10 or 14 or 15, wherein the terminal device does not expect at least one of the following:

at least one second number of bits corresponding to at least one cell in a set of cells is different from each other, the at least one second number of bits corresponding to the at least one cell in the set of cells being greater than 0;

at least one transmission configuration parameter corresponding to the at least one cell in the set of cells is different from each other, the at least one cell in the set of cells being configured with the at least one transmission configuration parameter; or

at least one number of elements comprised in the at least one transmission configuration parameter corresponding to the at least one cell in the set of cells is different from each other, the at least one number of elements comprised in the at least one transmission configuration parameter corresponding to the at least one cell in the set of cells being greater than 0.

17. The method of claim 10, wherein the first number of bits is determined based on at least one of:

a second number of bits corresponding to each cell in the cell combination;

a transmission configuration parameter corresponding to the cell in the cell combination, the transmission configuration parameter being used to configure information related to the transmission information;

a number of elements comprised in the transmission configuration parameter corresponding to the cell in the cell combination; or

a bit configuration parameter, the bit configuration parameter being used to indicate the first number of bits for the first information indicator;

wherein the second number of bits is determined according to at least one of: a determination manner of a number of bits for an information field corresponding to a data channel of each cell in the at least one cell under separate scheduling, or a transmission configuration parameter corresponding to each cell in the cell combination.

18. The method of claim 10, wherein the first number of bits is determined based on at least one of:

at least one second number of bits corresponding to at least one cell in the cell combination, the at least one second number of bits corresponding to the at least one cell in the cell combination being greater than 0;

at least one transmission configuration parameter corresponding to the at least one cell in the cell combination, the at least one cell in the cell combination being configured with the at least one transmission configuration parameter;

at least one number of elements comprised in the at least one transmission configuration parameter corresponding to the at least one cell in the cell combination, the at least one number of elements comprised in the at least one transmission configuration parameter corresponding to the at least one cell in the cell combination being greater than 0; or

a bit configuration parameter, the bit configuration parameter being used to indicate the first number of bits for the first information indicator;

wherein the second number of bits is determined according to at least one of: a determination manner of a number of bits for an information field corresponding to a data channel of each cell in the at least one cell under separate scheduling, or a transmission configuration parameter corresponding to each cell in the cell combination.

19. The method of any one of claims 1 to 18, wherein the first information indicator comprises at least one of:

a bandwidth part (BWP) indicator;
an open-loop power control parameter set indication; or
a priority indicator.

20. The method of any one of claims 2 to 18, wherein the transmission configuration parameter comprises at least one of:

a configuration parameter of bandwidth part (BWP);
a parameter of an open-loop power control set list;
whether the first DCI comprises a sounding reference signal (SRS) information indicator;
a transmission configuration parameter for configuring a number of bits for an open-loop power control parameter set indication; or
a priority configuration parameter.

21. A method for indicating downlink control information, performed by a network device, the method comprising:

transmitting first downlink control information (DCI), wherein the first DCI is used to schedule N data channels, and the first DCI comprises a first information indicator, the first information indicator being used to indicate transmission information respectively for a data channel of at least one cell in a scheduled cell combination;
wherein the scheduled cell combination is a combination of N cells, and the N data channels correspond to the N cells, N being a positive integer.

22. The method of claim 21, further comprising:
determining the first DCI, wherein a codepoint of the first information indicator in the first DCI is determined based on transmission information indicated for a data channel of the at least one cell respectively.

23. The method of claim 22, further comprising:
transmitting a transmission configuration parameter corresponding to the at least one cell in the cell combination, wherein the transmission configuration parameter is used to configure information related to the transmission information.

24. The method of claim 23, wherein the transmission configuration parameter corresponding to the at least one cell in the cell combination comprises: pieces of transmission information corresponding to at least two sets of configurations; wherein transmission information corresponding to at least one cell belonging to a same set of configurations corresponds to a same codepoint, the codepoint is a codepoint of the first information indicator, and the first DCI is used to schedule the transmission information that corresponds to the at least one cell belonging to the same set of configurations.

25. The method of any one of claims 21 to 24, wherein the first number of bits for the first information indicator is determined based on at least one of:

a second number of bits corresponding to each cell in the set of cells;
a transmission configuration parameter corresponding to the cell in the set of cells, the transmission configuration parameter being used to configure information related to the transmission information;
a number of elements comprised in the transmission configuration parameter corresponding to the cell in the set of cells;
a bit configuration parameter, the bit configuration parameter being used to indicate the first number of bits for the first information indicator;
wherein the cell combination belongs to the set of cells, and the second number of bits is determined according to at least one of: a determination manner of a number of bits for an information field corresponding to a data channel of each cell in the at least one cell under separate scheduling, or a transmission configuration parameter corresponding to each cell in the set of cells.

26. The method of claim 25, wherein the first number of bits is at least one of:

a maximum value in second numbers of bits corresponding to respective cells in the set of cells;
a minimum value in the second number of bits corresponding to each cell in the set of cells;
a minimum value in the second numbers of bits corresponding to the respective cells in the set of cells;
a maximum value in transmission configuration parameters corresponding to the respective cells in the set of cells;
a minimum value in the transmission configuration parameters corresponding to the respective cells in the set of cells;
a maximum value in numbers of elements comprised in the transmission configuration parameters corresponding to the respective cells in the set of cells; or
a minimum value in the numbers of elements comprised in the transmission configuration parameters corresponding to the respective cells in the set of cells.

27. The method of claim 26, wherein transmitting the first DCI comprises:
transmitting the first DCI based on at least one of the following not expected by a terminal device:

second numbers of bits corresponding to respective cells in the set of cells are different;
transmission configuration parameters corresponding to the respective cells in the set of cells are different; or
numbers of elements comprised in the transmission configuration parameters corresponding to the respective cells in the set of cells are different.

28. The method of any one of claims 21 to 24, wherein the first number of bits is determined based on at least one of:

at least one second number of bits corresponding to at least one cell in the set of cells, the at least one second number of bits corresponding to the at least one cell in the set of cells being greater than 0;
at least one transmission configuration parameter corresponding to the at least one cell in the set of cells, the at least one cell in the set of cells being configured with the at least one transmission configuration parameter;
at least one number of elements comprised in the at least one transmission configuration parameter corresponding to the at least one cell in the set of cells, the at least one number of elements comprised in the at least one transmission configuration parameter corresponding to the at least one cell in the set of cells being greater than 0; or
a bit configuration parameter, the bit configuration parameter being used to indicate the first number of bits for the first information indicator;
wherein the cell combination belongs to the set of cells, and the second number of bits is determined according to at least one of: a determination manner of a number of bits for an information field corresponding to a data channel of each cell in the at least one cell under separate scheduling, or a transmission configuration parameter corresponding to each cell in the set of cells.

29. The method of claim 28, wherein the first number of bits is at least one of:

a maximum value in the at least one second number of bits corresponding to the at least one cell in the set of cells, the at least one second number of bits corresponding to the at least one cell in the set of cells being greater than 0;
a minimum value in the at least one second number of bits corresponding to the at least one cell in the set of cells, the at least one second number of bits corresponding to the at least one cell in the set of cells being greater than 0;
a maximum value in the at least one transmission configuration parameter corresponding to the at least one cell in the set of cells, the at least one cell in the set of cells being configured with the at least one transmission configuration parameter;
a minimum value in the at least one transmission configuration parameter corresponding to the at least one cell in the set of cells, the at least one cell in the set of cells being configured with the at least one transmission configuration parameter;
a maximum value in the at least one number of elements comprised in the at least one transmission configuration parameter corresponding to the at least one cell in the set of cells, the at least one number of elements comprised in the at least one transmission configuration parameter corresponding to the at least one cell in the set of cells being greater than 0; or
a minimum value in the at least one number of elements comprised in the at least one transmission configuration parameter corresponding to the at least one cell in the set of cells, the at least one number of elements comprised in the at least one transmission configuration parameter corresponding to the at least one cell in the set of cells being greater than 0.

30. The method of claim 29, wherein transmitting the first DCI comprises:
transmitting the first DCI based on at least one of the following not expected by a terminal device:

at least one second number of bits corresponding to at least one cell in a set of cells is different from each other, the at least one second number of bits corresponding to the at least one cell in the set of cells being greater than 0;
at least one transmission configuration parameter corresponding to the at least one cell in the set of cells is different from each other, the at least one cell in the set of cells being configured with the at least one transmission configuration parameter; or

at least one number of elements comprised in the at least one transmission configuration parameter corresponding to the at least one cell in the set of cells is different from each other, the at least one number of elements comprised in the at least one transmission configuration parameter corresponding to the at least one cell in the set of cells being greater than 0.

31. The method of any one of claims 21 to 24, wherein the first number of bits is determined based on at least one of:

a second number of bits corresponding to each cell in the cell combination;
a transmission configuration parameter corresponding to the cell in the cell combination, the transmission configuration parameter being used to configure information related to the transmission information;
a number of elements comprised in the transmission configuration parameter corresponding to the cell in the cell combination; or
a bit configuration parameter, the bit configuration parameter being used to indicate the first number of bits for the first information indicator;
wherein the second number of bits is determined according to at least one of: a determination manner of a number of bits for an information field corresponding to a data channel of each cell in the at least one cell under separate scheduling, or a transmission configuration parameter corresponding to each cell in the cell combination.

32. The method of any one of claims 21 to 24, wherein the first number of bits is determined based on at least one of:

at least one second number of bits corresponding to at least one cell in the cell combination, the at least one second number of bits corresponding to the at least one cell in the cell combination being greater than 0;
at least one transmission configuration parameter corresponding to the at least one cell in the cell combination, the at least one cell in the cell combination being configured with the at least one transmission configuration parameter;
at least one number of elements comprised in the at least one transmission configuration parameter corresponding to the at least one cell in the cell combination, the at least one number of elements comprised in the at least one transmission configuration parameter corresponding to the at least one cell in the cell combination being greater than 0; or
a bit configuration parameter, the bit configuration parameter being used to indicate the first number of bits for the first information indicator;
wherein the second number of bits is determined according to at least one of: a determination manner of a number of bits for an information field corresponding to a data channel of each cell in the at least one cell under separate scheduling, or a transmission configuration parameter corresponding to each cell in the cell combination.

33. The method of any one of claims 21 to 32, wherein the first information indicator comprises at least one of:

a bandwidth part (BWP) indicator;
an open-loop power control parameter set indication; or
a priority indicator.

34. The method of any one of claims 23 to 32, wherein the transmission configuration parameter comprises at least one of:

a configuration parameter of bandwidth part (BWP);
a parameter of an open-loop power control set list;
whether the first DCI comprises a sounding reference signal (SRS) information indicator;
a transmission configuration parameter for configuring a number of bits for an open-loop power control parameter set indication; or
a priority configuration parameter.

35. An apparatus for indicating downlink control information, comprising:

a reception module, configured to receive first downlink control information (DCI), wherein the first DCI is used to schedule N data channels, a and the first DCI comprises a first information indicator, the first information indicator being used to indicate transmission information respectively for a data channel of at least one cell in a scheduled cell combination;
wherein the scheduled cell combination is a combination of N cells, and the N data channels correspond to the N cells, N being a positive integer.

36. The apparatus of claim 35, further comprising:
a determination module, configured to determine the transmission information indicated by the first information indicator for the data channel of the at least one cell respectively based on at least one of:

a second number of bits corresponding to each cell in the cell combination;
a transmission configuration parameter corresponding to the cell in the cell combination, the transmission configuration parameter being used to configure information related to the transmission information; or
a first number of bits for the first information indicator;
wherein the second number of bits is determined according to at least one of: a determination manner of a number of bits for an information field corresponding to a data channel of each cell in the at least one cell under separate scheduling, or a transmission configuration parameter corresponding to each cell in the cell combination; and
wherein the number of bits for the information field is a number of bits for an information field corresponding to the first information indicator.

37. The apparatus of claim 36, wherein the determination module is further configured to determine the first number of bits based on at least one of:

a second number of bits corresponding to each cell in a set of cells;
a transmission configuration parameter corresponding to the cell in the set of cells, the transmission configuration parameter being used to configure information related to the transmission information;
a number of elements comprised in the transmission configuration parameter corresponding to the cell in the set of cells; or
a bit configuration parameter, the bit configuration parameter being used to indicate the first number of bits;
wherein the cell combination belongs to the set of cells, and the second number of bits is determined according to at least one of: a determination manner of a number of bits for an information field corresponding to a data channel of each cell in the at least one cell under separate scheduling, or a transmission configuration parameter corresponding to each cell in the set of cells.

38. The apparatus of claim 36, wherein the determination module is further configured to determine the first number of bits based on at least one of:

at least one second number of bits corresponding to at least one cell in the set of cells, the at least one second number of bits corresponding to the at least one cell in the set of cells being greater than 0;
at least one transmission configuration parameter corresponding to the at least one cell in the set of cells, the at least one cell in the set of cells being configured with the at least one transmission configuration parameter;
at least one number of elements comprised in the at least one transmission configuration parameter corresponding to the at least one cell in the set of cells, the at least one number of elements comprised in the at least one transmission configuration parameter corresponding to the at least one cell in the set of cells being greater than 0; or
a bit configuration parameter, the bit configuration parameter being used to indicate the first number of bits for the first information indicator;
wherein the cell combination belongs to the set of cells, and the second number of bits is determined according to at least one of: a determination manner of a number of bits for an information field corresponding to a data channel of each cell in the at least one cell under separate scheduling, or a transmission configuration parameter corresponding to each cell in the set of cells.

39. The apparatus of claim 36, wherein the determination module is further configured to determine the first number of bits based on at least one of:

a second number of bits corresponding to each cell in the cell combination;
a transmission configuration parameter corresponding to the cell in the cell combination, the transmission configuration parameter being used to configure information related to the transmission information;
a number of elements comprised in the transmission configuration parameter corresponding to the cell in the cell combination; or
a bit configuration parameter, the bit configuration parameter being used to indicate the first number of bits for the first information indicator;
wherein the second number of bits is determined according to at least one of: a determination manner of a number of bits for an information field corresponding to a data channel of each cell in the at least one cell under separate scheduling, or a transmission configuration parameter corresponding to each cell in the cell combination.

40. The apparatus of claim 36, wherein the determination module is further configured to determine the first number of bits based on at least one of:

at least one second number of bits corresponding to at least one cell in the cell combination, the at least one second number of bits corresponding to the at least one cell in the cell combination being greater than 0;
at least one transmission configuration parameter corresponding to the at least one cell in the cell combination, the at least one cell in the cell combination being configured with the at least one transmission configuration parameter;
at least one number of elements comprised in the at least one transmission configuration parameter corresponding to the at least one cell in the cell combination, the at least one number of elements comprised in the at least one transmission configuration parameter corresponding to the at least one cell in the cell combination being greater than 0; or
a bit configuration parameter, the bit configuration parameter being used to indicate the first number of bits for the first information indicator;
wherein the second number of bits is determined according to at least one of: a determination manner of a number of bits for an information field corresponding to a data channel of each cell in the at least one cell under separate scheduling, or a transmission configuration parameter corresponding to each cell in the cell combination.

41. The apparatus according to any one of claims 35 to 40, wherein the first information indicator comprises at least one of:

a bandwidth part (BWP) indicator;
an open-loop power control parameter set indication; or
a priority indicator.

42. The apparatus according to any one of claims 36 to 40, wherein the transmission configuration parameter comprises at least one of:

a configuration parameter of bandwidth part (BWP);
a parameter of an open-loop power control set list;
whether the first DCI comprises a sounding reference signal (SRS) information indicator;
a transmission configuration parameter for configuring a number of bits for an open-loop power control parameter set indication; or
a priority configuration parameter.

43. An apparatus for indicating downlink control information, comprising:

a transmission module, configured to transmit first downlink control information (DCI), wherein the first DCI is used to schedule N data channels, and the first DCI comprises a first information indicator, the first information indicator being used to indicate transmission information respectively for a data channel of at least one cell in a scheduled cell combination;
wherein the scheduled cell combination is a combination of N cells, and the N data channels correspond to the N cells, N being a positive integer.

44. The apparatus of claim 43, further comprising a generation module, configured to generate the first DCI, wherein a codepoint of the first information indicator in the first DCI is determined based on transmission information indicated for a data channel of the at least one cell respectively.

45. The apparatus according to claim 44, wherein the transmission module is further configured to transmit a transmission configuration parameter corresponding to the at least one cell in the cell combination, wherein the transmission configuration parameter is used to configure information related to the transmission information.

46. The apparatus of claim 45, wherein the transmission configuration parameters corresponding to the at least one cell in the cell combination comprises: pieces of transmission information corresponding to at least two sets of configurations;
wherein transmission information corresponding to at least one cell belonging to a same set of configurations corresponds to a same codepoint, the codepoint is a codepoint of the first information indicator, and the first DCI is used to schedule the transmission information that corresponds to the at least one cell belonging to the same set of configurations.

47. The apparatus according to any one of claims 43 to 46, wherein the first information indicator comprises at least one of:

    a bandwidth part (BWP) indicator;
    an open-loop power control parameter set indication; or
    a priority indicator.

48. The apparatus according to claim 45 or 46, wherein the transmission configuration parameter comprises at least one of:

    a configuration parameter of bandwidth part (BWP);
    a parameter of an open-loop power control set list;
    whether the first DCI comprises a sounding reference signal (SRS) information indicator;
    a transmission configuration parameter for configuring a number of bits for an open-loop power control parameter set indication; or
    a priority configuration parameter.

49. A terminal device, comprising:

    a processor;
    a transceiver connected with the processor; and
    a memory for storing executable instructions of the processor;
    wherein the processor is configured to load and execute the executable instructions, to cause the terminal device to implement the method for indicating downlink control information of any one of claims 1 to 20.

50. A network device comprising:

    a processor;
    a transceiver connected with the processor; and
    a memory for storing executable instructions of the processor;
    wherein the processor is configured to load and execute the executable instructions, to cause the network device to implement the method for indicating downlink control information of any one of claims 21 to 34.

51. A computer-readable storage medium, having stored therein executable instructions that, when being loaded and executed by the processor, cause a communication device to implement the method for indicating downlink control information according to any one of claims 1 to 20 or the method for indicating downlink control information according to any one of claims 21 to 34.

52. A chip, comprising a programmable logic circuit or a program, wherein the chip is configured to implement the method for indicating downlink control information according to any one of claims 1 to 20 or the method for indicating downlink control information according to any one of claims 21 to 34.

53. A computer program product, comprising computer instructions stored in a computer-readable storage medium, wherein a processor of a communication device reads the computer instructions from the computer-readable storage medium, and the processor executes the computer instructions to cause the communication device to perform the method for indicating downlink control information according to any one of claims 1 to 20 or the method for indicating downlink control information according to any one of claims 21 to 34.

54. A computer program, comprising computer instructions that, when being executed by a processor of a communication device, cause the communication device to perform the method for indicating downlink control information according to any one of claims 1 to 20 or the method for indicating downlink control information according to any one of claims 21 to 34.

**FIG. 1**

A first DCI is received, the first DCI being used for scheduling N data channels, and the first DCI including a first information indicator — 210

**FIG. 2**

A first DCI is received, the first DCI being used for scheduling N data channels, and the first DCI including a first information indicator — 310

Transmission information indicated by the first information indicator for a data channel of at least one cell in a cell combination respectively is determined — 330

**FIG. 3**

A first DCI is received, the first DCI being used for scheduling N data channels, and the first DCI including a first information indicator

410

A first number of bits for the first information indicator is determined

430

**FIG. 4**

A first DCI is received, the first DCI being used for scheduling N data channels, and the first DCI including a first information indicator

510

Transmission information indicated by the first information indicator for data channels of N cells respectively is determined

530

**FIG. 5**

A transmission configuration parameter corresponding to the cell combination is transmitted

620

A first DCI is determined

640

A first DCI is transmitted

660

**FIG. 6**

710

Reception module

730

Determination
module

**FIG. 7**

830

Generation module

810

Transmission
module

**FIG. 8**

Communication device 900

Processor 901    Transmitter 903

905

Bus

Receiver 902    Memory 904

**FIG. 9**

## INTERNATIONAL SEARCH REPORT

| International application No. |
|---|
| **PCT/CN2022/142128** |

| A. | CLASSIFICATION OF SUBJECT MATTER |
|---|---|

H04L 27/00(2006.01)i

According to International Patent Classification (IPC) or to both national classification and IPC

| B. | FIELDS SEARCHED |
|---|---|

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, ENTXT, VCN, 3GPP: 下行, 控制, 指示, 配置, 参数, 传输, 域, 信道, 频率, 小区, 调度, 比特, DL, control, indication, DCI, configuration, parameter, transmission, field, channel, frequency, cell, schedule, dispatch, bit

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115336360 A (BEIJING XIAOMI MOBILE SOFTWARE CO., LTD.) 11 November 2022 (2022-11-11) description, paragraphs 6-69 | 1-54 |
| X | CN 115336324 A (BEIJING XIAOMI MOBILE SOFTWARE CO., LTD.) 11 November 2022 (2022-11-11) description, paragraphs 5-18 | 1-54 |
| X | WO 2021201533 A1 (SAMSUNG ELECTRONICS CO., LTD.) 07 October 2021 (2021-10-07) description, paragraphs 245-253 | 1-54 |
| X | WO 2021223704 A1 (VIVO MOBILE COMMUNICATION CO., LTD.) 11 November 2021 (2021-11-11) description, pages 7-13 | 1-54 |
| A | HUAWEI et al. "Resource indication of UL control channel" *3GPP TSG RAN WG1 Meeting #88 R1-1701648*, 17 February 2017 (2017-02-17), entire document | 1-54 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 August 2023** | **17 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/142128**

**C.    DOCUMENTS CONSIDERED TO BE RELEVANT**

| Category* | Citation of document, with indication, where appropriate, of the relevant passages | Relevant to claim No. |
|---|---|---|
| A | WO 2021164729 A1 (VIVO MOBILE COMMUNICATION CO., LTD.) 26 August 2021 (2021-08-26) entire document | 1-54 |

Form PCT/ISA/210 (second sheet) (July 2022)

**INTERNATIONAL SEARCH REPORT**
Information on patent family members

International application No.

**PCT/CN2022/142128**

| Patent document cited in search report | | | Publication date (day/month/year) | Patent family member(s) | | | Publication date (day/month/year) |
|---|---|---|---|---|---|---|---|
| CN | 115336360 | A | 11 November 2022 | None | | | |
| CN | 115336324 | A | 11 November 2022 | None | | | |
| WO | 2021201533 | A1 | 07 October 2021 | US | 2023217458 | A1 | 06 July 2023 |
| | | | | KR | 20210122417 | A | 12 October 2021 |
| WO | 2021223704 | A1 | 11 November 2021 | EP | 4135453 | A1 | 15 February 2023 |
| | | | | US | 2023066709 | A1 | 02 March 2023 |
| | | | | JP | 2023524310 | A | 09 June 2023 |
| | | | | CN | 113630873 | A | 09 November 2021 |
| WO | 2021164729 | A1 | 26 August 2021 | CN | 113285788 | A | 20 August 2021 |

Form PCT/ISA/210 (patent family annex) (July 2022)